# EUROPEAN PATENT APPLICATION

(11) **EP 4 826 664 A1**
(43) Date of publication of application: **21.10.2026**
(21) Application number: 26168434.4
(22) Date of filing: 27.03.2026
(51) Int. Cl.: G06T 15/06

(54) **IMPLEMENTING RAY TRACING IN A RAY TRACING SYSTEM**

(30) Priority: 07.04.2025 GB 202505213; 09.05.2025 GB 202507171
(71) Applicant: Imagination Technologies Limited, Kings Langley, Hertfordshire WD4 8LZ (GB)
(72) Inventor: Aman, Aytek, Hertfordshire, WD4 8LZ (GB); Fenney, Simon, Hertfordshire, WD4 8LZ (GB)
(74) Representative: Slingsby Partners LLP

(57) **Abstract**

Methods and ray tracing systems are provided for implementing ray tracing by traversing an acceleration structure for a ray that is being traced to or from a first primitive forming part of a surface. The first primitive belongs to a subset of primitives of the surface. During traversal of the acceleration structure for the ray that is being traced to or from the first primitive an indication of an escape trajectory angle for the first primitive is received. The indication of the escape trajectory angle for the first primitive is determined prior to traversal of the acceleration structure for the ray. Any ray originating from any point on the first primitive and having a trajectory angle that meets an escape criterion with respect to the escape trajectory angle will miss all of the primitives in the subset of primitives. The determined indication of the escape trajectory angle for the first primitive is used to determine whether a trajectory angle of the ray meets the escape criterion with respect to the escape trajectory angle for the first primitive. In response to determining that the trajectory angle of the ray meets the escape criterion with respect to the escape trajectory angle for the first primitive, it is inferred that the ray misses all of the primitives that are not the first primitive in the subset of primitives, and intersection testing of the ray with portions of the acceleration structure associated with the subset of primitives is skipped.

## Description

### CROSS-REFERENCE TO RELATED APPLICATION

This application claims priority from UK patent application 2505213.5 filed on 7 April 2025 and from UK patent application 2507171.3 filed on 9 May 2025, which are herein incorporated by reference in their entirety.

### TECHNICAL FIELD

The present disclosure is directed to techniques for implementing ray tracing in a ray tracing system by traversing an acceleration structure.

### BACKGROUND

Ray tracing is a computational rendering technique for generating an image of a scene (e.g., a 3D scene) by tracing paths of light ('rays') through a scene, usually from the viewpoint of a camera, but also as secondary rays, for example from object reflections. Each primary ray may be modelled as originating from the camera and passing through a pixel into the scene. As a ray traverses the scene it may intersect objects within the scene, thus creating secondary rays which usually originate from the surface of an object, and which are used to model lighting effects such as reflections, refractions and shadows. The interaction between rays and objects can be modelled to create realistic visual effects. A shadow ray is a type of ray which may be cast from (or towards) a light source towards (or away from) an object in order determine an effect of lighting from the light source on the appearance of a surface of the object.

Surfaces of objects are typically represented using primitives. A primitive has a simple geometric shape, often a triangle, defined by the positions of one or more vertices (e.g. three vertices in the case that the primitive is a triangle), to which a visual appearance (e.g. defined by a texture) can be applied. Although primitives are often triangular, primitives may have other shapes, e.g. they may be other convex planar polygons. Furthermore, objects may be represented with geometry that is built from a structure called a mesh. A mesh is a set of points that form a non-directed graph, and the points in the graph can be connected to form planar polygons, i.e. primitives.

In general, most ray tracing processes involve: (i) performing intersection testing for rays in order to determine which surfaces the rays intersect within a scene, and (ii) in response to determining an intersection of a ray with a primitive, executing a shader program to determine how to respond to the intersection. For example, the execution of the shader program may determine a colour, or a contribution to a colour for a pixel of an image being rendered. The execution of the shader program may result in the emission of a secondary ray, which can be processed in the same way as other rays, i.e. by performing intersection testing on the ray and executing a shader program in response to determining an intersection for the ray.

There may be many primitives in a scene being rendered, e.g. there may be thousands or even millions of primitives in a scene being rendered. Furthermore, the rendering of an image of a scene using ray tracing may involve processing many (e.g. millions of) rays. Therefore, a vast amount of processing is required to render an image of a scene using a ray tracing technique. In particular, a huge number of intersection tests need to be performed. It would be beneficial to be able to render many images per second, e.g. 30 images per second so that the images can be used to represent frames of a video sequence that is being rendered in real-time, e.g. for use in real-time gaming. Furthermore, it would be beneficial to be able to implement ray tracing on small devices which may be battery-powered, such as mobile phones, tablets and laptops. As such, techniques for making the ray tracing process more efficient (e.g. in terms of power consumption and/or latency) are very beneficial.

One known approach for making the intersection testing process more efficient is to use an acceleration structure. An acceleration structure typically comprises a set of nodes, wherein each node of an acceleration structure represents a region within the scene. Acceleration structures are often hierarchical (e.g., having a tree structure) such that they include multiple levels of nodes, wherein nodes near the top of the acceleration structure represent relatively large regions in the scene (e.g., the root node may represent the whole scene), and nodes near the bottom of the acceleration structure represent smaller regions in the scene. The regions that are represented by the nodes are normally shaped to allow for efficient intersection testing of rays against the nodes. For example, the regions that are represented by the nodes may be axis-aligned bounding boxes (AABBs) or spheres. Typically, if a ray intersects a first node in the acceleration structure then the ray is tested for intersection with the child nodes of the first node, whereas if a ray does not intersect with the first node then the ray is not tested for intersection with the child nodes of the first node. This process continues down the tree structure of the acceleration structure until a leaf node is intersected. A leaf node represents a (relatively small) region in the scene and is associated with primitives that are present within that region. In response to determining that the ray intersects a leaf node, the ray is tested for intersection with the primitives that are present within the region represented by that leaf node. It is noted that the testing of a ray for intersection with the region (e.g. an AABB or a sphere) represented by a node of the acceleration structure can normally be performed more efficiently than the testing of a ray for intersection with a primitive. This is because the shapes and orientations of the primitives are generally not adapted for efficient intersection testing, whereas the shapes and/or orientations of the regions represented by the nodes of the acceleration structure are adapted for efficient intersection testing. The use of the acceleration structure reduces the number of times that a ray needs to be tested for intersection with primitives in the scene, and therefore can drastically reduce the processing power and latency of performing the intersection testing. However, even with an acceleration structure, a large amount of intersection testing is still required to render a scene, and there is still a desire to further reduce the power consumption and latency involved in performing intersection testing in ray tracing processes. In particular, this would be useful when attempting to implement ray tracing in a ray tracing system on a small, battery-powered device.

A 'meshlet' is a concept that already exists in graphics processing, mainly used in rasterization systems, rather than in ray tracing systems. For example, a post on the Khronos Blog entitled "Mesh Shading for Vulkan" by Christoph Kubisch, found at https://www.khronos.org/blog/mesh-shading-for-vulkan, describes that when rasterizing geometry, mesh shaders may make use of pre-computed triangle clusters, which may be referred to as meshlets. The main motivation for using meshlets is to break up a large mesh of primitives/polygons into smaller chunks for efficient processing on a graphics processing unit (GPU), e.g. by enabling a rasteriser (or other graphics processing pipeline in general) to work on one chunk (i.e. "meshlet") at a time in a predefined manner. For example, subdividing meshes into meshlets can lead to various processing efficiencies, such as enhancing culling techniques, reducing unnecessary shading, and better handling of complex geometry. For example, the data defining a mesh may be subdivided into groups of vertices (e.g. with up to 64 vertices in each group) that can be more easily processed on the GPU. Each of these 'groups of vertices' is a meshlet. The data of a meshlet may be able to be processed in parallel on the GPU, which leads to efficient processing.

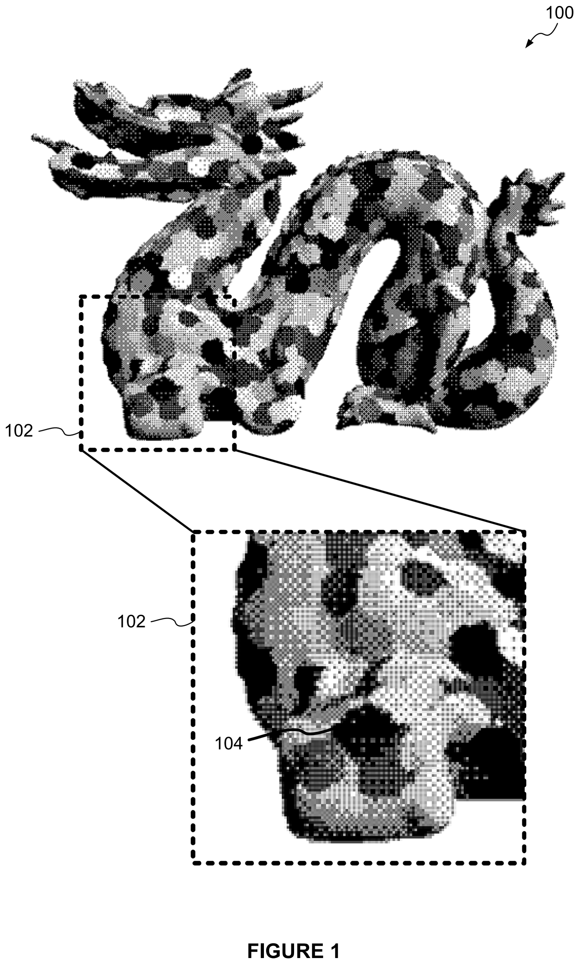

For example, Figure 1 illustrates an object 100 which has a surface that may be represented with a mesh. The mesh may be subdivided into a plurality of meshlets, which are shown in Figure 1 as differently shaded patches on the surface of the object. For example, Figure 1 shows a magnified version of a portion 102 of the object 100, and indicates one of the meshlets 104 which is shown with dark shading. Many meshlets are shown in Figure 1. In general, a meshlet is a mesh region, wherein there is usually an upper limit on the number of primitives and/or vertices within a meshlet, the primitives within a meshlet usually have similar normals and are usually connected to each other, and there are usually no holes in a meshlet. Since meshlets often represent small portions of closed surfaces, meshlets are often approximately flat and/or usually near-convex.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of implementing ray tracing in a ray tracing system by traversing an acceleration structure for a ray that is being traced to or from a first primitive forming part of a surface, wherein the first primitive belongs to a subset of primitives of the surface, the method comprising:
during traversal of the acceleration structure for said ray that is being traced to or from the first primitive:
receiving an indication of an escape trajectory angle for the first primitive, wherein the indication of the escape trajectory angle for the first primitive is determined prior to traversal of the acceleration structure for the ray, and wherein any ray originating from any point on the first primitive and having a trajectory angle that meets an escape criterion with respect to the escape trajectory angle will miss all of the primitives in the subset of primitives;
using the determined indication of the escape trajectory angle for the first primitive to determine whether a trajectory angle of the ray meets the escape criterion with respect to the escape trajectory angle for the first primitive; and
in response to determining that the trajectory angle of the ray meets the escape criterion with respect to the escape trajectory angle for the first primitive, inferring that the ray misses all of the primitives that are not the first primitive in the subset of primitives, and skipping intersection testing of the ray with portions of the acceleration structure associated with the subset of primitives.

The trajectory angle of the ray may meet the escape criterion with respect to the escape trajectory angle for the first primitive if the trajectory angle of the ray is less than the escape trajectory angle for the first primitive.

The trajectory angle of the ray may be the angle between the direction of the ray and the normal of first primitive.

The trajectory angle of the ray may be the angle between the direction of the ray and the normal of a plane associated with the subset of primitives.

A respective indication of an escape trajectory angle may be determined for each of the primitives in the subset of primitives. Alternatively, the determined indication of the escape trajectory angle for the first primitive may indicate an escape trajectory angle for a plurality, but not for all, of the primitives of the subset of primitives. As another alternative, the determined indication of the escape trajectory angle for the first primitive may indicate an escape trajectory angle for all of the primitives of the subset of primitives.

The subset of primitives of the surface may define a meshlet.

The method may further comprise, prior to traversing the acceleration structure for the ray, generating nodes of the acceleration structure, wherein the meshlet defined by the subset of primitives may have its own subtree of one or more nodes within the acceleration structure.

Said skipping intersection testing of the ray with portions of the acceleration structure associated with the subset of primitives may comprise skipping intersection testing of the ray with the subtree of one or more nodes for the meshlet.

The method may further comprise, prior to traversing the acceleration structure for the ray, obtaining a plurality of meshlets, wherein each of the meshlets is defined by a respective subset of primitives forming a respective part of the surface; wherein the nodes of the acceleration structure may be generated in dependence on the plurality of meshlets, and wherein each of the meshlets may have its own subtree of one or more nodes within the acceleration structure.

The indication of the escape trajectory angle for the first primitive may be the cosine of the escape trajectory angle for the first primitive.

Said using the determined indication of the escape trajectory angle for the first primitive to determine whether a trajectory angle of the ray meets the escape criterion with respect to the escape trajectory angle for the first primitive may comprise either: (i) comparing the trajectory angle of the ray with the escape trajectory angle for the first primitive, or (ii) comparing the cosine of the trajectory angle of the ray with the cosine of the escape trajectory angle for the first primitive.

The method may further comprise, prior to traversing the acceleration structure for the ray, determining the indication of the escape trajectory angle for the first primitive.

Said determining the indication of the escape trajectory angle for the first primitive may comprise:
for each of a plurality of other primitives in the subset of primitives other than the first primitive, determining a candidate indication of an escape trajectory angle for the first primitive based on the other primitive; and
identifying one of the candidate indications to be used as the indication of the escape trajectory angle for the first primitive on the basis that any ray originating from any point on the first primitive and having a trajectory angle that meets the escape criterion with respect to the escape trajectory angle indicated by the identified candidate indication will miss all of the primitives in the subset of primitives.

Said plurality of other primitives in the subset of primitives other than the first primitive may comprise all of the primitives in the subset.

Said plurality of other primitives in the subset of primitives other than the first primitive may comprise all of the primitives in the subset which are located, at least partially, in front of a plane in which the first primitive lies, wherein said plurality of other primitives in the subset of primitives other than the first primitive might not comprise primitives which are located entirely behind the plane in which the first primitive lies.

The method may further comprise:
identifying that one of the other primitives in the subset of primitives is partially in front of, and partially behind, the plane in which the first primitive lies;
clipping the identified other primitive to form: (i) a first set of one or more new primitives which do not, even partially, lie behind the plane in which the first primitive lies, and (ii) a second set of one or more new primitives which lie entirely behind the plane in which the first primitive lies; and
processing the first set of one or more new primitives, but not the second set of one or more new primitives, to determine the candidate indication of the escape trajectory angle for the first primitive based on the identified other primitive.

The trajectory angle of the ray may be defined with respect to the normal of the first primitive, and wherein a candidate indication of an escape trajectory angle for the first primitive based on an other primitive may be an indication of a minimum trajectory angle that a ray originating from any point on the first primitive and hitting the other primitive could have, and wherein the identified candidate indication may be the candidate indication which indicates the smallest of the minimum trajectory angles which have been determined for said plurality of other primitives.

Said determining an indication of a minimum trajectory angle that a ray originating from any point on the first primitive and hitting an other primitive could have may comprise:
determining that the other primitive is adjacent to the first primitive; and
determining the minimum trajectory angle that a ray originating from any point on the first primitive and hitting the other primitive could have based on an angle between the normal of the other primitive and the normal of the first primitive.

Said determining an indication of a minimum trajectory angle that a ray originating from any point on the first primitive and hitting an other primitive could have may comprise:
determining a maximum value (*max_cos*) of the cosine of the angle between the normal (*N*) of the first primitive and a vector between any point (*P*₁) on the first primitive and any point (*P*₂) on the other primitive, wherein $max_ cos = max \left(0, \left\{N⋅\frac{{P}_{2} - {P}_{1}}{\left‖{P}_{2}-{P}_{1}\right‖} ∀{P}_{1}∀{P}_{2}\right\}\right) .$

Said determining a maximum value (*max_cos*) of the cosine of the angle between the normal (*N*) of the first primitive and a vector between any point (*P*₁) on the first primitive and any point (*P*₂) on the other primitive may comprise using: (i) a simplex method for solving optimisation problems, (ii) a conjugate gradient hill climbing technique, or (iii) interval arithmetic.

Said determining the indication of the escape trajectory angle for the first primitive may comprise:
determining that the subset of primitives defines a portion of the surface of the object that is convex; and
setting the indication of the escape trajectory angle for the first primitive to indicate that the escape trajectory angle for the first primitive will allow all rays to escape;
wherein said using the determined indication of the escape trajectory angle for the first primitive to determine whether a trajectory angle of the ray meets the escape criterion with respect to the escape trajectory angle for the first primitive may comprise determining that the trajectory angle of the ray meets the escape criterion with respect to the escape trajectory angle for the first primitive in response to identifying that the indication of the escape trajectory angle for the first primitive is set to indicate that the escape trajectory angle for the first primitive will allow all rays to escape.

The surface may be a surface of an object, and the ray may be being traced from the first primitive. The ray may be a secondary ray that originates from the first primitive, wherein the secondary ray may be a result of an intersection between a previous ray and the first primitive.

The surface may be an emissive surface of a light source, and the ray may be being traced to the first primitive. The ray may be a reflection ray or a shadow ray.

The method may comprise:
during traversal of the acceleration structure for the ray:
receiving two indications of escape trajectory angles for respective sides of the first primitive;
identifying which side of the first primitive the ray is being traced to or from; and
selecting the one of the two indications of escape trajectory angles for the first primitive which is for the identified side of the first primitive;
wherein the selected indication of the escape trajectory angle for the first primitive may be used to determine whether a trajectory angle of the ray meets the escape criterion with respect to the escape trajectory angle for the first primitive.

The indication of the escape trajectory angle for the first primitive may be determined offline.

The method may further comprise:
prior to traversing the acceleration structure for the ray, storing the indication of the escape trajectory angle for the first primitive in a memory;
wherein said receiving an indication of an escape trajectory angle for the first primitive during traversal of the acceleration structure for the ray may comprise reading the indication of the escape trajectory angle for the first primitive from the memory.

The subset of primitives may be associated with a subtree of one or more nodes within the acceleration structure.

The subset of primitives may include no more than 256 primitives.

The first primitive may belong to a plurality of subsets of primitives. Each of the subsets of primitives may be associated with a respective subtree of one or more nodes within the acceleration structure.

The method may comprise:
for each of the subsets of primitives to which the first primitive belongs, receiving an indication of an escape trajectory angle for the first primitive in respect of the subset of primitives, wherein the indication of the escape trajectory angle for the first primitive in respect of the subset of primitives is determined prior to traversal of the acceleration structure for the ray, and wherein any ray originating from any point on the first primitive and having a trajectory angle that meets an escape criterion with respect to the escape trajectory angle in respect of the subset of primitives will miss all of the primitives in the subset of primitives;
wherein said using the determined indication of the escape trajectory angle for the first primitive to determine whether a trajectory angle of the ray meets the escape criterion with respect to the escape trajectory angle for the first primitive may comprise:
   selecting one of the subsets of primitives based on the trajectory angle of the ray and the indications of the escape trajectory angles for the first primitive in respect of the subsets of primitives;
   wherein the determined indication of the escape trajectory angle for the first primitive that is used to determine whether the trajectory angle of the ray meets the escape criterion is the indication of the escape trajectory angle for the first primitive in respect of the selected subset of primitives.

Said selecting one of the subsets of primitives based on the trajectory angle of the ray and the indications of the escape trajectory angles for the first primitive in respect of the subsets of primitives may comprise selecting, of the subsets of primitives for which the trajectory angle of the ray meets the escape criterion with respect to the escape trajectory angle for the first primitive in respect of that subset of primitives, the subset of primitives for which the escape trajectory angle for the first primitive is closest to the trajectory angle of the ray.

There is provided a ray tracing system configured to implement ray tracing by traversing an acceleration structure for a ray that is traced to or from a first primitive forming part of a surface, wherein the first primitive belongs to a subset of primitives of the surface, the ray tracing system comprising:
traversal logic configured to, during traversal of the acceleration structure for said ray that is traced to or from the first primitive:
receive an indication of an escape trajectory angle for the first primitive, wherein the indication of the escape trajectory angle for the first primitive is determined prior to traversal of the acceleration structure for the ray, and wherein any ray originating from any point on the first primitive and having a trajectory angle that meets an escape criterion with respect to the escape trajectory angle will miss all of the primitives in the subset of primitives;
use the determined indication of the escape trajectory angle for the first primitive to determine whether a trajectory angle of the ray meets the escape criterion with respect to the escape trajectory angle for the first primitive; and
in response to determining that the trajectory angle of the ray meets the escape criterion with respect to the escape trajectory angle for the first primitive, infer that the ray misses all of the primitives that are not the first primitive in the subset of primitives, and skip intersection testing of the ray with portions of the acceleration structure associated with the subset of primitives.

The ray tracing system may further comprise pre-traversal logic configure to, prior to traversal of the acceleration structure for the ray, determine the indication of the escape trajectory angle for the first primitive.

The traversal logic may be configured to, in response to determining that the trajectory angle of the ray does not meet the escape criterion with respect to the escape trajectory angle for the first primitive, perform intersection testing of the ray with the portions of the acceleration structure associated with the subset of primitives.

There may be provided a ray tracing system configured to perform any of the methods described herein.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a ray tracing system as described herein.

There may be provided a method of implementing ray tracing in a ray tracing system, the method comprising:
obtaining a plurality of meshlets, wherein each of the meshlets is defined by a respective subset of primitives forming a respective part of a surface;
generating nodes of an acceleration structure in dependence on the plurality of meshlets, wherein each of the meshlets has its own subtree of one or more nodes within the acceleration structure;
traversing the acceleration structure for a ray that is being traced to or from a first primitive which belongs to one of the subsets of primitives which defines one of the meshlets, wherein traversing the acceleration structure for the ray comprises:
   determining whether it can be inferred, without performing intersection testing of the ray with the subtree of one or more nodes for said one of the meshlets, that the ray will miss all of the primitives that are not the first primitive in said one of the subsets of primitives; and
   in response to determining that it can be inferred that the ray will miss all of the primitives that are not the first primitive in said one of the subsets of primitives, skipping intersection testing of the ray with the subtree of one or more nodes for said one of the meshlets.

The method may further comprise determining an indication of an escape trajectory angle for the first primitive, wherein any ray originating from any point on the first primitive and having a trajectory angle that meets an escape criterion with respect to the escape trajectory angle will miss all of the primitives in said one of the subsets of primitives.

Said determining whether it can be inferred, without performing intersection testing of the ray with the subtree of one or more nodes for said one of the meshlets, that the ray will miss all of the primitives that are not the first primitive in said one of the subsets of primitives may comprise:
using the determined indication of the escape trajectory angle for the first primitive to determine whether a trajectory angle of the ray meets the escape criterion with respect to the escape trajectory angle for the first primitive; and
in response to determining that the trajectory angle of the ray meets the escape criterion with respect to the escape trajectory angle for the first primitive, inferring that the ray will miss all of the primitives that are not the first primitive in said one of the subsets of primitives.

There may be provided a ray tracing system comprising:
pre-traversal logic configured to:
   obtain a plurality of meshlets, wherein each of the meshlets is defined by a respective subset of primitives forming a respective part of a surface; and
   generate nodes of an acceleration structure in dependence on the plurality of meshlets, wherein each of the meshlets has its own subtree of one or more nodes within the acceleration structure; and
traversal logic configured to traverse the acceleration structure for a ray that is being traced to or from a first primitive which belongs to one of the subsets of primitives which defines one of the meshlets, wherein the traversal logic is configured to:
   determine whether it can be inferred, without performing intersection testing of the ray with the subtree of one or more nodes for said one of the meshlets, that the ray will miss all of the primitives that are not the first primitive in said one of the subsets of primitives; and
   in response to determining that it can be inferred that the ray will miss all of the primitives that are not the first primitive in said one of the subsets of primitives, skip intersection testing of the ray with the subtree of one or more nodes for said one of the meshlets.

The pre-traversal logic may be further configured to, prior to traversal of the acceleration structure for the ray, determine an indication of an escape trajectory angle for the first primitive, wherein any ray originating from any point on the first primitive and having a trajectory angle that meets the escape criterion with respect to the escape trajectory angle will miss all of the primitives in said one of the subsets of primitives.

For determining whether it can be inferred, without performing intersection testing of the ray with the subtree of one or more nodes for said one of the meshlets, that the ray will miss all of the primitives that are not the first primitive in said one of the subsets of primitives, the traversal logic may be configured to:
use the determined indication of the escape trajectory angle for the first primitive to determine whether a trajectory angle of the ray meets the escape criterion with respect to the escape trajectory angle for the first primitive; and
in response to determining that the trajectory angle of the ray meets the escape criterion with respect to the escape trajectory angle for the first primitive, infer that the ray will miss all of the primitives that are not the first primitive in said one of the subsets of primitives.

For determining whether it can be inferred, without performing intersection testing of the ray with the subtree of one or more nodes for said one of the meshlets, that the ray will miss all of the primitives that are not the first primitive in said one of the subsets of primitives, the traversal logic may be configured to:
in response to determining that the trajectory angle of the ray does not meet the escape criterion with respect to the escape trajectory angle for the first primitive, determine that it cannot be inferred that the ray will miss all of the primitives that are not the first primitive in said one of the subsets of primitives without performing intersection testing of the ray with the subtree of one or more nodes for said one of the meshlets.

The traversal logic may be configured to, in response to determining that it cannot be inferred that the ray will miss all of the primitives that are not the first primitive in said one of the subsets of primitives, perform intersection testing of the ray with the subtree of one or more nodes for said one of the meshlets.

The ray tracing system may be embodied in hardware on an integrated circuit. There may be provided a method of manufacturing, at an integrated circuit manufacturing system, a ray tracing system. There may be provided an integrated circuit definition dataset that, when processed in an integrated circuit manufacturing system, configures the system to manufacture a ray tracing system. There may be provided a non-transitory computer readable storage medium having stored thereon a computer readable description of a ray tracing system that, when processed in an integrated circuit manufacturing system, causes the integrated circuit manufacturing system to manufacture an integrated circuit embodying a ray tracing system.

There may be provided an integrated circuit manufacturing system comprising: a non-transitory computer readable storage medium having stored thereon a computer readable description of the ray tracing system; a layout processing system configured to process the computer readable description so as to generate a circuit layout description of an integrated circuit embodying the ray tracing system; and an integrated circuit generation system configured to manufacture the ray tracing system according to the circuit layout description.

There may be provided computer program code for performing any of the methods described herein. There may be provided a non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a first object having a surface represented with a mesh that is subdivided into meshlets;
Figure 2 shows rays intersecting the surface of a second object;
Figure 3 shows a ray tracing system;
Figure 4 is a flow chart for a method of implementing ray tracing in a ray tracing system;
Figure 5 illustrates an example acceleration structure;
Figure 6 illustrates a ray being traced from a primitive which belongs to a subset of primitives of a surface;
Figure 7 illustrates another ray being traced from another primitive which belongs to a subset of primitives of a surface;
Figure 8 illustrates a first primitive and another primitive of a subset of primitives that defines a meshlet;
Figure 9a shows plan view of a region of escape for a primitive;
Figure 9b shows a perspective view of the region of escape for the primitive shown in Figure 9a;
Figure 10 shows a computer system in which a graphics processing system is implemented; and
Figure 11 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. In examples described herein the concept of breaking up a mesh into meshlets is used to improve the efficiency of the traversal of an acceleration structure in a ray tracing system. As described above, a meshlet is a mesh region, and there is usually an upper limit on the number of primitives and/or vertices within a meshlet. Although it is not necessarily the case, the primitives within a meshlet usually have similar normals and are usually connected to each other, and there are usually no holes in a meshlet. For example, a set of vertex and primitive data for a mesh may be split into portions, based on the order in which the vertex and primitive data is represented in the data for the mesh, wherein each portion of the data represents a meshlet derived from the mesh. Primitives in a meshlet usually lie substantially in the same or similar orientation.

During a ray tracing process, a large proportion of rays that are processed are secondary rays. When a secondary ray is emitted from a primitive, the ray will pass through the region surrounding that primitive, and so the ray will intersect the region represented by the leaf node which is associated with that primitive. Therefore the ray will be tested for intersection with all of the primitives that are associated with that leaf node. However, it has been appreciated that, very often, the ray does not intersect any other primitives associated with that leaf node. For example, if the secondary ray is a reflection ray and the primitive is part of a convex surface, then it is highly unlikely (or even impossible) for the ray to intersect with another primitive representing a nearby part of the same surface. Therefore the processing involved in fetching the primitive data for the primitives associated with the leaf node and testing the ray for intersection with those primitives is often wasted. In other words, lots of intersection tests are often performed for a ray in respect of primitives that the ray is unlikely to hit. The examples described herein provide techniques for reducing the amount of wasted processing that is performed in this situation, thereby improving the efficiency of the ray tracing process. For example, the concept of a meshlet can be utilised to reduce the amount of unnecessary processing performed during traversal of an acceleration structure for a ray that is being traced to or from a primitive that belongs to a subset of primitives that defines the meshlet. In particular, in some situations, as described below, the traversal logic of a ray tracing system can infer that a ray that originates from a first primitive which is part of a subset of primitives will miss all of the other primitives in the subset, such that intersection testing of the ray with portions of the acceleration structure associated with the subset of primitives can be skipped. This can greatly reduce the number of intersection tests that need to be performed, in particular it can greatly reduce the number of intersection tests that need to be performed for the ray with respect to a primitive. It is noted that primitive intersection tests are generally more complex (e.g. approximately 6 or 7 times more costly in terms of mathematical operations) to implement than intersection tests with respect to a node (e.g. representing an AABB or a sphere), and it is noted that primitive intersection tests require reading of primitive data from memory. Reading data from memory is a relatively slow and power-consuming process compared to performing calculations as part of the intersection testing. As such, skipping intersection testing of the ray with portions of the acceleration structure associated with the subset of primitives, when it can be inferred that the ray will miss all of the primitives which are not the first primitive in the subset, can lead to significant technical benefits such as reduced processing latency and reduced power consumption.

In examples described herein, for a ray that is being traced to or form a first primitive that belongs to a subset of primitives of a surface, an inference that a ray will miss all of the primitives that are not the first primitive in the subset of primitives can be performed based on an 'escape trajectory angle' for the first primitive. In particular, prior to traversal of the acceleration structure for the ray, an escape trajectory angle can be determined for each of the primitives. The escape trajectory angle for a primitive is determined such that any ray originating from any point on the primitive and having a trajectory angle that meets an escape criterion with respect to the escape trajectory angle will miss all of the primitives in the subset of primitives. The escape criterion will depend on how the escape trajectory angle is defined for the system. For example, if the escape trajectory angle for a primitive is defined as an angle with respect to the normal of the primitive, then the escape criterion for a ray missing all of the primitives in the subset of primitives may be that the ray's trajectory angle is less than the escape trajectory angle (or, in some such systems, the escape criterion may be that the trajectory angle is less than or equal to the escape trajectory angle). Alternatively, if the escape trajectory angle for a primitive is defined as an angle with respect to the plane of the primitive (i.e. 90° minus the angle with respect to the normal), then the escape criterion for a ray missing all of the primitives in the subset of primitives may be that the ray's trajectory angle is more than the escape trajectory angle (or, in some such systems, the escape criterion may be that the trajectory angle is more than or equal to the escape trajectory angle). The primitives of a subset of primitives are in the same vicinity on the surface. It may be a time-consuming task to determine the escape trajectory angles for the primitives representing the surfaces in a scene to be rendered, but this determination can be performed offline, i.e. before the time at which the acceleration structure is to be traversed, so it will not introduce significant (if any) delay into the process of traversing the acceleration structure. Indications of the escape trajectory angles for the primitives can be stored with very little data. For example, an indication of an escape trajectory angle for a primitive may be stored as the cosine of the escape trajectory angle. The cosine of the escape trajectory angle will be a value in the range [0..1], and may be stored with 8, 10, 16, 23, or 32 bits to give some examples. During traversal of a ray that is being traced to or from a first primitive which belongs to a subset of primitives, the indication of the escape trajectory angle can be used to determine whether a trajectory angle of the ray meets the escape criterion with respect to the escape trajectory angle for the first primitive, and if so, skip the intersection testing of the ray with portions of the acceleration structure associated with the subset of primitives on the basis that it can be inferred that the ray misses all of the primitives that are not the first primitive in the subset of primitives. This is described in more detail below with reference to the examples shown in the figures. It is noted that a primitive may have two escape trajectory angles: one for each side of the primitive.

Furthermore, in some examples, the nodes of the acceleration structure can be generated in dependence on the meshlets, such that each of the meshlets has its own subtree of one or more nodes within the acceleration structure. This is particularly beneficial if it can be inferred, without performing intersection testing of a ray with a subtree of one or more nodes for one of the meshlets, that the ray will miss all of the primitives in the subset of primitives that defines that meshlet, because in that case, intersection testing of the ray with the subtree of one or more nodes for said one of the meshlets can be skipped. In other words, a whole subtree of node(s) of the acceleration structure can be skipped during the traversal of the acceleration structure. Furthermore, it is noted that: (a) this subtree of node(s) would conventionally always be tested for intersection with the ray because the ray will be present within the regions of the scene represented by some of the nodes of the subtree, and (b) it is highly likely that it can be inferred that the ray will not intersect any of the other primitives in the subset of primitives associated with any of the nodes of the subtree. As such, the efficiencies that can be achieved using the techniques described herein occur many, many times (e.g. millions of times) during the rendering of a scene.

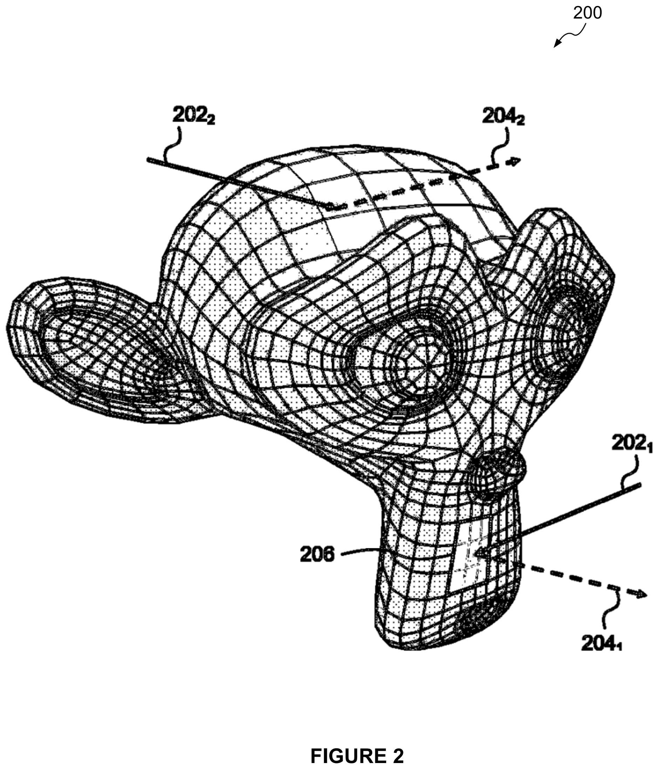

Figure 2 shows rays intersecting the surface of an object 200. The surface of the object is represented using a mesh. Each of the quadrilaterals shown in Figure 2 on the surface of the object 200 may be formed with a plurality of triangular primitives, e.g. with two triangular primitives which share an edge, or with four triangular primitives which share a vertex at point within the quadrilateral, to give two examples. Figure 2 shows a ray 202₁ (e.g. a primary ray) intersecting a first primitive on the surface of the object 200 and causing a secondary ray (e.g. a reflection ray or a shadow ray) 204₁ to be emitted. The secondary ray 204₁ originates from a point (e.g. the intersection point between the ray 202₁ and the first primitive) on the first primitive and is traced away from the first primitive. Figure 2 illustrates a subset of primitives 206 to which the first primitive belongs. The subset of primitives 206 defines a meshlet. Figure 2 also shows another ray 202₂ intersecting another primitive on the surface of the object 200 and causing another secondary ray (e.g. a reflection ray or a shadow ray) 204₂ to be emitted from the intersection point between the ray 202₂ and the other primitive.

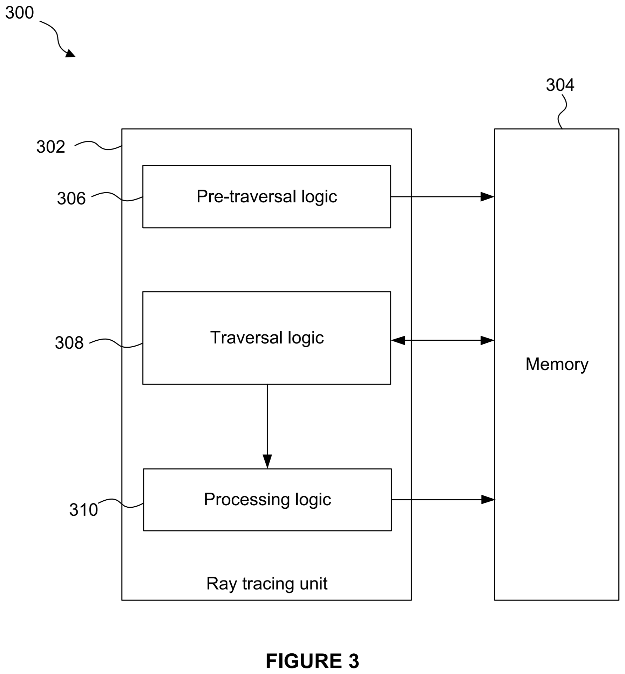

Figure 3 shows a ray tracing system 300 that is configured to perform intersection testing. Intersection testing may be performed to render an image of a scene (e.g., a 3D scene). Rendering an image of a scene using ray tracing may involve performing many intersection tests. The ray tracing system comprises a ray tracing unit 302 and a memory 304. The ray tracing unit 302 comprises pre-traversal logic 306, traversal logic 308 and processing logic 310. Although it is not shown in Figure 3, the traversal logic 308 may comprise an intersection testing module which comprises one or more box intersection testing modules and/or one or more primitive intersection testing modules. In operation the ray tracing unit 302 receives geometric data defining objects within the 3D scene. Objects may be represented using one or more primitives, and the geometric data can include primitive data defining the primitives. A primitive may have a planar shape, e.g., a triangular shape, and may be represented as a set of vertices, wherein the primitive data defining the primitive may include vertex data associated with the vertices of the primitive. As described above, the primitives may define meshes representing surfaces of objects in the scene. A plurality of meshlets for a mesh representing the surface of an object can be determined, e.g. by the pre-traversal logic 306 or by some other processing unit that is not shown in Figure 3. The pre-traversal logic 306 is configured to generate an acceleration structure based on the geometric data, and to send the acceleration structure to the memory 304 for storage therein. As described herein, each of the meshlets may have its own subtree of one or more nodes within the acceleration structure. After the acceleration structure has been stored in the memory 304, the traversal logic 308 can retrieve nodes of the acceleration structure from the memory 304 to perform intersection testing of rays against the retrieved nodes. The results of the intersection testing are provided to the processing logic 310. The processing logic 310 is configured to process the results of the intersection testing to determine processed values. The processed values may for example be pixel values representing an image of the 3D scene. The processed values determined by the processing logic 310 can be passed back to the memory 304 for storage therein, e.g. to represent the image of the 3D scene.

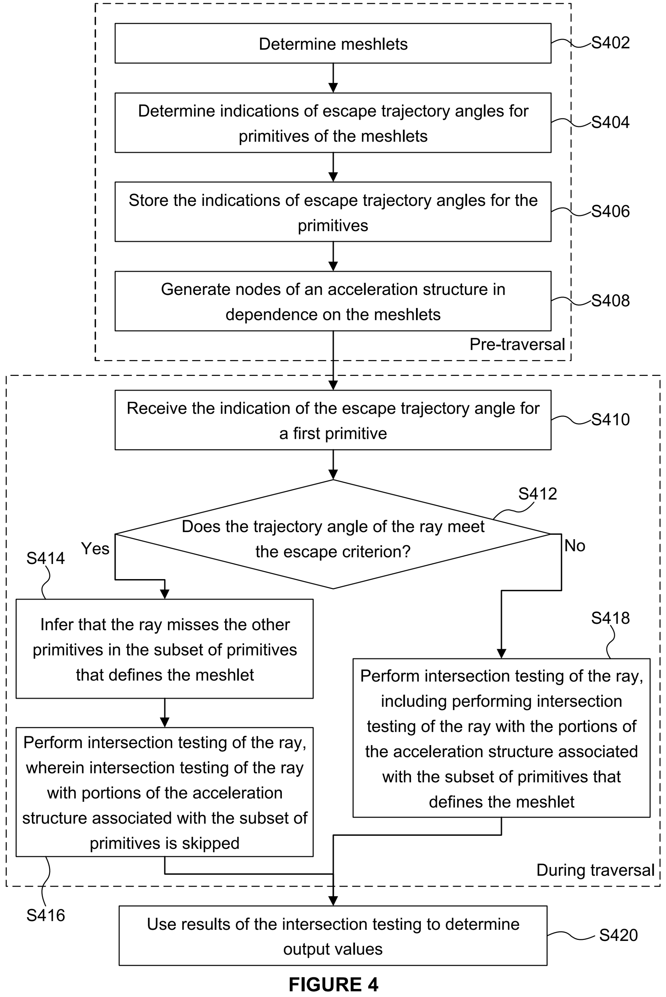

Figure 4 is a flow chart for a method of implementing ray tracing in the ray tracing system 300 by traversing an acceleration structure for a ray that is being traced to or from a first primitive forming part of a surface of an object. The first primitive belongs to a subset of primitives of the surface. Figure 4 shows a number of steps (steps S402 to S408) which may be performed prior to traversing the acceleration structure for the ray, e.g. by the pre-traversal logic 306 and/or by another processing unit that is not shown in Figure 3. Figure 4 shows a number of steps (steps S410 to S418) which may be performed during traversal of the acceleration structure for the ray, e.g. by the traversal logic 308.

In step S402 a plurality of meshlets are determined by subdividing a mesh which represents a surface in a scene. Each of the meshlets is defined by a respective subset of primitives forming a respective part of the surface. Techniques for subdividing a mesh to form meshlets are known in the art, so for conciseness, a detailed description of how this can be done is not provided herein, but a skilled person would know how to subdivide a mesh to form a plurality of meshlets. Step S402 may be performed by the pre-traversal logic 306. Alternatively, the meshlets may be formed somewhere other than on the ray tracing unit 302, e.g. the meshlets may be formed by a processing unit (e.g. a Central Processing Unit (CPU) or a Graphics Processing Unit (GPU)) of a system which defines the mesh representing the surface, such that the meshlets can be provided to the ray tracing unit 302 without the ray tracing unit 302 needing to determine the meshlets.

In step S404, indications of escape trajectory angles for primitives of the meshlets are determined. For example, step S404 may involve determining an indication of an escape trajectory angle for each primitive which is used to define the scene to be rendered. Step S404 may be performed by the pre-traversal logic 306. Alternatively, the indications of escape trajectory angles for primitives of the meshlets may be determined somewhere other than on the ray tracing unit 302, e.g. the meshlets may be formed by a processing unit (e.g. a Central Processing Unit (CPU) or a Graphics Processing Unit (GPU)) of a system which defines the mesh representing the surface, such that the indications of escape trajectory angles for primitives of the meshlets can be provided to the ray tracing unit 302 without the ray tracing unit 302 needing to determine them. The indication of the escape trajectory angle for a first primitive which belongs to a subset of primitives of a surface (e.g. defining a meshlet) is determined based on the other primitives in that subset of primitives. The indication of the escape trajectory angle for the first primitive which belongs to the subset of primitives of the surface (e.g. defining the meshlet) is not determined based on any primitives which are not in that subset of primitives. For example, the indication of the escape trajectory angle for the first primitive is determined such that any ray originating from any point on the first primitive and having a trajectory angle with respect to the normal of the first primitive that is less than the escape trajectory angle with respect to the normal of the first primitive will miss all of the primitives in the subset of primitives. It may be that any ray originating from any point on the first primitive and having a trajectory angle with respect to the normal of the first primitive that is not greater than the escape trajectory angle with respect to that normal will miss all of the primitives in the subset of primitives. To give two examples, the indication of the escape trajectory angle for a primitive may be the escape trajectory angle itself or may be the cosine of the escape trajectory angle for the primitive. It may be simpler (i.e. it may require considerably fewer maths operations to determine and subsequently use), and require less data to be stored, to indicate the escape trajectory angle as the cosine of the escape trajectory angle. In particular, a determination of the cosine of the angle between two unit vectors can be performed by implementing a dot product between the two vectors. The calculation of a dot product between two vectors is very simple and efficient to implement, e.g. in fixed function circuitry. In other examples, other trigonometric functions may be used (such as the sine or the tangent) in order to determine the indication of the escape trajectory angle for a primitive. Some examples of how the escape trajectory angle for a first primitive may be determined are described in more detail below.

As mentioned above, the escape trajectory angle for a primitive and the trajectory angle of a ray may be defined relative to the plane of the primitive, or relative to the normal of the primitive. That is, the trajectory of a ray being traced to or from a first primitive will form an angle defined between the direction of the ray and either the plane of the first primitive or the normal of the first primitive.

Alternatively, the escape trajectory angle for a primitive and the trajectory angle of a ray may be defined relative to a plane, or the normal of that plane, of the subset of primitives to which the primitive belongs. For example, the trajectory angle of a ray being traced to or from a first primitive may be the angle between the direction of the ray and the normal of the plane associated with the subset of primitives. For example, the plane of the subset of primitives may be an average of the planes of the primitives belonging to the subset. The subset of primitives may define a meshlet, and the meshlet may be approximately planar.

There may be a separate indication of an escape trajectory angle determined for each primitive, or an indication of an escape trajectory angle may be determined for multiple primitives. In other words, there are different options for determining the indications of the escape trajectory angles for the primitives in a subset of primitives, and some of those options are:
(i) a respective indication of an escape trajectory angle may be determined for each of the primitives in the subset of primitives (i.e. the determined indication of the escape trajectory angle for a first primitive is for only the first primitive),
(ii) the determined indication of an escape trajectory angle for a first primitive may indicate an escape trajectory angle for a plurality, but not for all, of the primitives of the subset of primitives, or
(iii) the determined indication of the escape trajectory angle for the first primitive may indicate an escape trajectory angle for all of the primitives of the subset of primitives (i.e. a single indication of an escape trajectory angle may be determined for all of the primitives of the subset of primitives).

In step S406 the indications of the escape trajectory angles for the primitives are stored in the memory 304.

Steps S402, S404 and S406 may be performed 'offline', and may be performed either by the pre-traversal logic 306 or by some other processing unit (e.g. a CPU or a GPU), which may or may not be implemented on the same device as the ray tracing unit 302. Performing steps S402, S404 and S406 offline means that the meshlets may be determined, and the indications of the escape trajectory angles for the primitives of the meshlets may be determined and stored, before a process of testing any rays for intersection against the meshlets begins. This means that the time taken to determine the meshlets and the escape trajectory angles for the primitives of the meshlets does not introduce latency into the process of testing the rays for intersection against the meshlets. Furthermore, performing steps S402, S404 and S406 offline works particularly well if the primitives are representing static geometry, i.e. geometry that does not alter over time. In some alternative examples, it would be possible to perform one or more of steps S402, S404 and S406 at runtime, i.e. at the start of a process for testing rays for intersection against the meshlets.

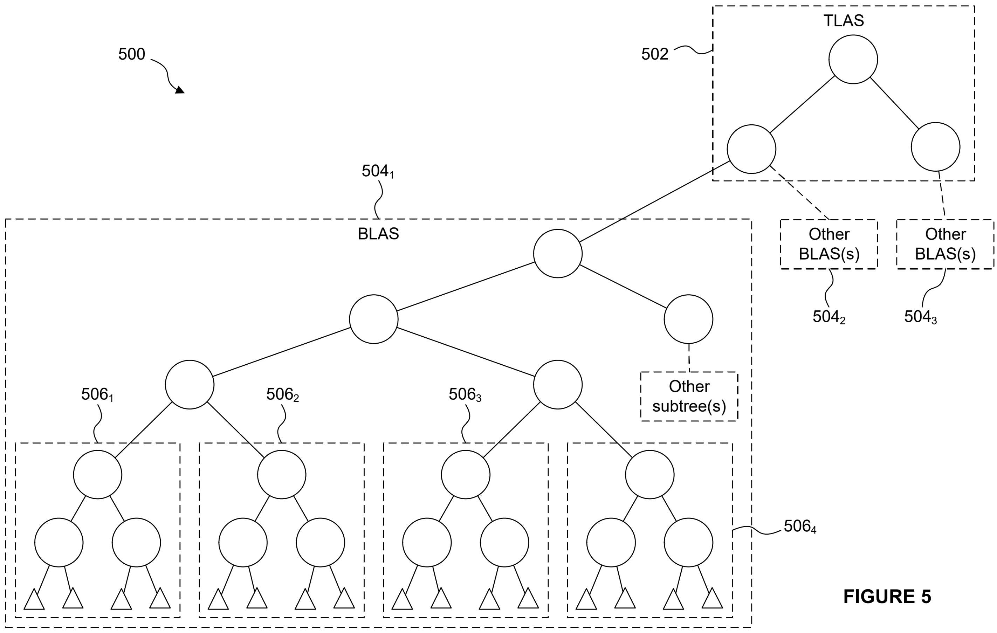

In step S408 the pre-traversal logic 306 generates nodes of an acceleration structure in dependence on the plurality of meshlets. Step S408 is a pre-processing step in the sense that it is performed prior to traversing the acceleration structure for a ray, e.g. by a driver as an application supplies geometry to the system, or, e.g. via suitable API functions, could be supplied directly by the application having been generated 'offline' or by the application. Techniques for generating nodes of an acceleration structure are known in the art, and for conciseness, the details of such techniques are not provided herein. Figure 5 illustrates an example acceleration structure 500. The acceleration structure 500 may be a bounding volume hierarchy. In particular, the acceleration structure 500 is a hierarchical acceleration structure comprising a Top-Level Acceleration Structure (TLAS) and a plurality of Bottom-Level Acceleration Structures (BLASs) 504₁, 504₂ and 504₃. A skilled person would understand how an acceleration structure can be built from a TLAS and a number of BLASs. In particular, a BLAS contains information about a particular object's geometry within its own coordinate system, whereas a TLAS contains information about the scene being rendered with nodes being defined in the scene coordinate system. An instance of the geometry for an object can be placed into the scene by inserting the appropriate BLAS into the acceleration structure and defining a transformation (i.e. scaling, rotation, translation, etc.) to convert data between the BLAS coordinate system and the TLAS coordinate system. Each object may be represented in a BLAS, and can have any number of instances in the scene, each with its own transformation. This allows objects to be easily replicated at different positions and/or orientations with the scene.

The circles shown in Figure 5 are nodes of the acceleration structure 500, where each node represents a region of the scene. The regions generally get smaller for nodes that are further down (i.e. further away from the 'root node' or 'top node') in the acceleration structure. In particular, the region represented by a child node is wholly within, and smaller than, the region represented by its parent node in the acceleration structure. As described above, the regions represented by the nodes of the acceleration structure have shapes that lead to efficient intersection testing of a ray against those regions. For example, the regions may be axis-aligned bounding boxes (AABBs), spheres, slabs or 'k-dops' (k-sided discrete orientation polytopes). The nodes at the very bottom level of the acceleration structure are leaf nodes and they are associated with primitives (which are shown as triangles in Figure 5). A leaf node is associated with a primitive if the primitive is present within the region represented by the leaf node. In order to traverse the acceleration structure for a ray, i.e. in order to perform intersection testing for a ray using the acceleration structure, the ray is tested for intersection with the region represented by the root node (i.e. the top node of the acceleration structure). The region represented by the root node may include the whole scene to be rendered. If it is determined that a ray intersects a given node then the ray is tested for intersection with the nodes that are the children of the given node. In contrast, if it is determined that a ray does not intersect a given node then the ray is not tested for intersection with nodes that are the children of the given node. If it is determined that a ray intersects a given leaf node then the ray is tested for intersection with the primitives that are associated with the given leaf node. In contrast, if it is determined that a ray does not intersect a given leaf node then the ray is not tested for intersection with the primitives that are associated with the given leaf node.

According to examples described herein a plurality of meshlets are obtained (e.g. determined or received), wherein each of the meshlets is defined by a respective subset of primitives forming a respective part of a surface. The nodes of the acceleration structure are generated in dependence on the plurality of meshlets. Each of the meshlets has its own subtree of one or more nodes within the acceleration structure. These subtrees are at the bottom levels of the acceleration structure. For example, Figure 5 shows that the BLAS 504₁ includes four subtrees 506₁, 506₂, 506₃ and 506₄, which are for four respective meshlets. In particular, each of the subtrees 506 is associated with the primitives of a single meshlet. Furthermore, all of the primitives associated with a meshlet are included in a single one of the subtrees 506. In this way, each subtree is dedicated to a single meshlet.

Once the nodes of the acceleration structure have been determined, the acceleration structure (i.e. the data representing the acceleration structure) is stored in the memory 304.

There may be a significant time delay between step S408 and step S410. As mentioned above, in examples described herein the traversal logic 308 is configured to perform steps S410 to S418 during traversal of the acceleration structure for a ray which is being traced to or from a first primitive which belongs to a subset of primitives that defines a meshlet.

In step S410 the traversal logic 308 receives the indication of the escape trajectory angle for the first primitive. In particular, the traversal logic 308 reads the indication of the escape trajectory angle for the first primitive from the memory.

In step S412 the traversal logic 308 uses the indication of the escape trajectory angle for the first primitive to determine whether a trajectory angle of the ray meets the escape criterion with respect to the escape trajectory angle for the first primitive. For example, step S412 could involve using the indication of an escape trajectory angle for the first primitive, defined with respect to the normal of the first primitive, to determine whether a trajectory angle of the ray defined with respect to that normal is less than the escape trajectory angle for the first primitive. In some other examples, the escape trajectory angle could be defined slightly differently such that step S412 would involve using the indication of the escape trajectory angle for the first primitive, defined with respect to the normal of the first primitive, to determine whether a trajectory angle of the ray defined with respect to that normal is less than or equal to the escape trajectory angle for the first primitive. Furthermore, in some examples, step S412 could involve using the indication of an escape trajectory angle for the first primitive, defined with respect to the plane of the first primitive (i.e. 90° minus the angle with respect to the normal of the first primitive), to determine whether a trajectory angle of the ray defined with respect to that plane is greater than (or greater than or equal to) the escape trajectory angle for the first primitive.

If the answer to the question in step S412 is 'yes' i.e. if the trajectory angle of the ray meets the escape criterion with respect to the escape trajectory angle for the first primitive, then due to the way in which the escape trajectory angle was defined in step S404, this means that the ray cannot intersect any of the other primitives in the subset of primitives to which the first primitive belongs. Whereas, if the answer to the question in step S412 is 'no' i.e. if the trajectory angle of the ray does not meet the escape criterion with respect to the escape trajectory angle for the first primitive, then this means that it is not known whether the ray intersects any of the other primitives in the subset of primitives to which the first primitive belongs, such that intersection testing should be performed in order to determine whether the ray intersects any of the other primitives in the subset of primitives. If the answer to the question in step S412 is 'yes' then the method passes from step S412 to step S414. If the answer to the question in step S412 is 'no' then the method passes from step S412 to step S418.

In some examples, the indication of the escape trajectory angle for the first primitive is a value of the escape trajectory angle itself. Step S412 in which the determined indication of the escape trajectory angle for the first primitive is used to determine whether a trajectory angle of the ray meets the escape criterion with respect to the escape trajectory angle for the first primitive may comprise comparing the trajectory angle of the ray with the escape trajectory angle for the first primitive. In other examples, the indication of the escape trajectory angle for the first primitive is the cosine of the escape trajectory angle. Step S412 in which the determined indication of the escape trajectory angle for the first primitive is used to determine whether a trajectory angle of the ray meets the escape criterion with respect to the escape trajectory angle for the first primitive may comprise comparing the cosine of the trajectory angle of the ray with the cosine of the escape trajectory angle for the first primitive.

In step S414, which is performed in response to determining in step S412 that the trajectory angle of the ray meets the escape criterion with respect to the escape trajectory angle for the first primitive, the traversal logic 308 infers that the ray misses all of the primitives that are not the first primitive in the subset of primitives. This means that intersection testing of the ray with portions of the acceleration structure associated with the subset of primitives can be skipped. In particular, in step S416 the traversal logic 308 performs intersection testing of the ray, but intersection testing of the ray with portions of the acceleration structure associated with the subset of primitives is skipped, i.e. not performed. Step S416 involves performing intersection testing of the ray with other portions of the acceleration structure that are not associated with the subset of primitives to which the first primitive belongs. However, the processing that would have been involved with performing intersection testing of the ray with portions of the acceleration structure associated with the subset of primitives is not carried out, thereby reducing the power consumption and latency of the intersection testing process. The intersection testing of the ray with other portions of the acceleration structure involves retrieving data for some nodes of the acceleration structure from the memory 304 to perform intersection testing of the ray against the retrieved nodes.

The skipping of the intersection testing of the ray with portions of the acceleration structure associated with the subset of primitives in step S416 will not cause any rendering errors because this skipping is only carried out when it is known that the ray will not intersect any of the other primitives (i.e. the primitives other than the first primitive) of the subset of primitives to which the first primitive belongs. Step S416 is only carried out if it was determined in step S412 that it can be inferred, without performing intersection testing of the ray with the subset of primitives, that the ray will miss all of the primitives that are not the first primitive in the subset of primitives. In particular, step S416 is only carried out if it was determined in step S412 that the trajectory angle of the ray meets the escape criterion with respect to the escape trajectory angle for the first primitive.

In step S418, which is performed in response to determining in step S412 that the trajectory angle of the ray does not meet the escape criterion with respect to the escape trajectory angle for the first primitive, the traversal logic 308 performs intersection testing of the ray, including performing intersection testing of the ray with the portions of the acceleration structure associated with the subset of primitives. In this case it cannot be inferred from step S412 whether the ray intersects any of the other primitives of the subset of primitives to which the first primitive belongs, so intersection testing of the ray with the portions of the acceleration structure associated with the subset of primitives cannot be skipped on the basis of the result of step S412. The intersection testing of the ray involves retrieving nodes of the acceleration structure from the memory 304 to perform intersection testing of the ray against the retrieved nodes.

The description above has described how a single ray is processed by the traversal logic to test the ray for intersection with the acceleration structure. The traversal logic 308 may process many rays together, in parallel. The traversal logic 308 may group a plurality of rays together into packets to be tested for intersection together against the same node or against the same primitive. The traversal logic 308 may be implemented as a Single Instruction Multiple Data (SIMD) processing module, configured to perform intersection testing of multiple rays in parallel. The traversal logic 308 may include fixed function circuitry for efficiently performing intersection testing. For example, the traversal logic 308 may include a box testing unit, which may be configured in fixed function circuitry, for efficiently performing intersection testing of rays against axis-aligned bounding boxes (e.g. where the nodes represent regions which are AABBs); and/or the traversal logic 308 may include a triangle testing unit, which may be configured in fixed function circuitry, for efficiently performing intersection testing of rays against triangles (where primitives are triangles).

Steps S410 to S418 may be performed for many rays. The intersection testing performed in step S416 and/or step S418 usually provides an indication of a primitive that the ray intersects with (or an indication that the ray misses all of the primitives in the scene), and may also indicate some information about the intersection, such as an intersection distance and/or barycentric coordinates indicating a position of an intersection point on an intersected primitive. The results of the intersection testing performed in step S416 and/or step S418 are provided from the traversal logic 308 to the processing logic 310.

In step S420 the processing logic 310 uses the results of the intersection testing that it receives from the traversal logic 308 to determine output values. The output values represent interactions of the rays with geometry in the scene, e.g. for use in rendering an image of the scene. For example, the output value may be a colour value for a pixel of an image. As another example, the output value may be a contribution towards a colour value for a pixel of an image, which may be combined with one or more other contributions from other rays (e.g. secondary rays) to determine a final colour value for a pixel of an image. The determination of the output values can be performed by running a shader program on the processing logic 310. Part of step S420 may involve emitting a secondary ray which is then processed as described above from step S410 by the traversal logic 308. A secondary ray may be used to model lighting effects such as reflections, refractions and shadows.

It is noted that in step S412, the traversal logic 308 determines whether it can be inferred, without performing intersection testing of the ray with the subtree of node(s) for the meshlet of which the first primitive is a part, that the ray will miss all of the primitives that are not the first primitive in the subset of primitives that defines the meshlet. Steps S410, S412 and S414 are performed before the ray is tested for intersection with any of the nodes of the subtree associated with the meshlet of which the first primitive is a part. For example, steps S410, S412 and S414 may be performed before the ray is tested for intersection with any of the nodes (even the root node) of the acceleration structure. As another example, steps S410, S412 and S414 may be performed at the point at which the ray is scheduled to be tested for intersection with the first node of the subtree associated with the meshlet (e.g. in response to determining that the ray intersects the node that is the parent of the first node of the subtree).

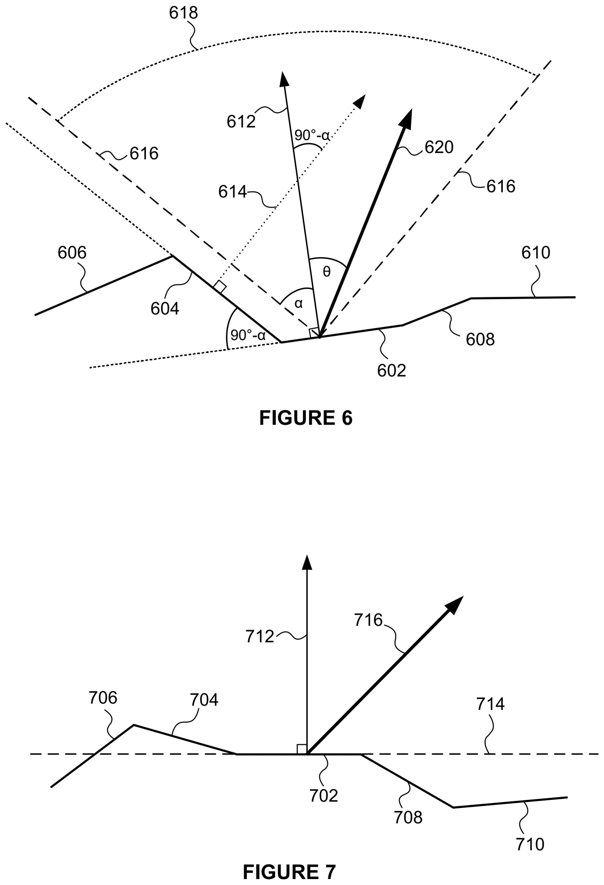

With reference to Figures 6, 7 and 8, we now describe, in more detail, some examples of how the escape trajectory for a first primitive could be determined and used in the method outlined above.

In some examples, the determination of an indication of an escape trajectory angle for the first primitive in step S404 comprises: (i) determining, for each of a plurality of other primitives in the subset of primitives other than the first primitive, a candidate indication of an escape trajectory angle for the first primitive based on the other primitive; and (ii) identifying one of the candidate indications to be used as the indication of the escape trajectory angle for the first primitive on the basis that any ray originating from any point on the first primitive and having a trajectory angle that meets an escape criterion with respect to the escape trajectory angle indicated by the identified candidate indication will miss all of the primitives in the subset of primitives. In examples in which trajectory angles are defined with respect to primitive plane normals, a candidate indication of an escape trajectory angle for the first primitive based on the other primitive may be an indication of a minimum trajectory angle that a ray originating from any point on the first primitive and hitting the other primitive could have (i.e. a 'minimum collision trajectory angle' for the first primitive based on the other primitive), and then the identified candidate indication would be the candidate indication which indicates the smallest minimum collision trajectory angle. In these examples, the determination of an indication of an escape trajectory angle for the first primitive in step S404 may comprise: (i) determining, for each of a plurality of other primitives in the subset of primitives other than the first primitive, an indication of a minimum collision trajectory angle for the first primitive based on the other primitive; and (ii) identifying which of the minimum collision trajectory angles associated with the plurality of other primitives in the subset is the smallest. The escape trajectory angle for the first primitive is determined to be the identified smallest of the minimum collision trajectory angles.

The 'plurality of other primitives in the subset of primitives other than the first primitive' for which a candidate indication of an escape trajectory angle for the first primitive is determined could comprise all of the primitives in the subset. Figure 6 illustrates a ray 620 being traced from a first primitive 602 which belongs to a subset of primitives of a surface. The other primitives in the subset of primitives are denoted 604, 606, 608 and 610 in Figure 6. The normal of the first primitive 602 is denoted 612, and the normal of the primitive 604 is denoted 614 in Figure 6. In this example, the escape trajectory angle for the first primitive 602 is denoted α. The escape trajectory angle, α, is the angle between the normal 612 of the primitive and a line 616 that is parallel to the plane of the primitive 604. The escape trajectory angle for the primitive 602 defines a region of escape 618 which is a cone which: (i) has its apex at the point on the primitive 602 from which the ray 620 is being traced, (ii) has its longitudinal axis parallel to the normal 612 of the primitive 602, and (iii) has a conic half-angle equal to the escape trajectory angle, α. The point on the primitive from which the ray is being traced could be any of the points on the primitive and the escape angle is applicable to all such points. The angle between the direction of the ray 620 and the normal of the first primitive 602 is denoted θ in Figure 6. In the example shown in Figure 6, *θ < α*, i.e. the angle between the ray direction and the normal of the primitive 602 is less than the escape trajectory angle for the primitive 602. Therefore, the ray 620 is within the region of escape, i.e. within the cone 618 and so the ray's trajectory meets the escape criterion. Therefore, it can be inferred (in step S414) that the ray will miss all of the primitives (other than the first primitive 602) in the subset of primitives. In other words, by determining that the ray 620 is within the region of escape defined by the escape trajectory angle (α) of the first primitive 602, it can be inferred that the ray will not intersect any of the other primitives (i.e. primitives 604, 606, 608 and 610) of the subset without needing to perform intersection testing of the ray with respect to those other primitives. As such the intersection testing of the ray with respect to those other primitives, and the intersection testing of the ray with respect to nodes of the acceleration structure that are associated with (only) those other primitives, can be skipped (in step S416). If, however, the ray did not fall within the region of escape defined by the escape trajectory angle (α) of the first primitive 602, i.e. if *θ* ≥ *α*, then the ray might intersect with one of the other primitives (i.e. with one of the primitives 604, 606, 608, 610) in the subset of primitives, and so in step S418 intersection testing is performed for the ray with respect to nodes of the acceleration structure that are associated with those other primitives.

It can be seen in Figure 6 that primitives 604 and 608 are adjacent to the first primitive 602, i.e. they share an edge (in 3D) (or a vertex in a 2D example) with the first primitive 602. In order to determine a candidate indication of an escape trajectory angle for the first primitive based on the other primitive (e.g. in order to determine an indication of a minimum collision trajectory angle for the first primitive based on the other primitive), step S404 may comprise, for each of these other primitives: determining that the other primitive is adjacent to the first primitive (which is the case for primitives 604 and 608, but not for primitives 606 and 610); and determining the candidate indication of an escape trajectory angle for the first primitive based on the other primitive (e.g. 604) using an angle between the normal (e.g. 614) of the other primitive (e.g. 604) and the normal 612 of the first primitive 602. It can be appreciated from Figure 6 that the angle between the normal 614 of the other primitive 604 and the normal 612 of the first primitive 602 is (90° - *α*). Rather than calculating the actual angles, it can be simpler (and more efficient to implement) to calculate the cosine of the angles. In particular, for the other primitives (604 and 608) which share an edge (in 3d) (or a vertex in 2d) with the first primitive 602, the indication of the minimum collision trajectory angle for the first primitive 602 based on the other primitive can be determined as the cosine of the minimum collision trajectory angle by calculating (1 - ***N*₁*.N*₂),** where ***N*₁** is a unit vector representing the normal of the first primitive 602 and ***N*₂** is a unit vector representing the normal of the other primitive.

The explanation provided above with reference to Figure 6 explains a simpler technique for determining an indication of a minimum collision trajectory angle for the first primitive based on an adjacent primitive (e.g. primitive 604 or 608), using the normals of the first primitive and the adjacent primitive. However, this technique cannot be reliably used to determine an indication of a minimum collision trajectory angle for the first primitive based on a non-adjacent primitive (e.g. primitive 606 or 610).

In general, the escape trajectory angle, α, cannot be more than 90°. However, it is noted that two escape trajectory angles may be defined for a surface: one for each side of the surface. It is also noted that in some examples, a planar primitive may be used to approximate a curved surface, wherein a 'fake' normal direction may vary across the planar primitive to approximate the curved surface, e.g. for use with lighting calculations such as reflections. Towards the outside of the primitive, the fake normal direction may deviate from the normal of the planar primitive by a significant amount such that a 'negative' reflection direction with respect to the normal of the planar primitive may be possible, but in examples described herein the escape trajectory angle, α, for a primitive is limited to have a maximum value of 90° even if negative reflection directions from the primitive are possible. The 'plurality of other primitives in the subset of primitives other than the first primitive' based on which a candidate indication of an escape trajectory angle for the first primitive is determined could comprise fewer than all of the primitives in the subset. For example, the 'plurality of other primitives in the subset of primitives other than the first primitive' based on which a candidate indication of an escape trajectory angle is determined could comprise (only) the primitives in the subset which are located, at least partially, in front of a plane in which the first primitive lies. This means that the 'plurality of other primitives in the subset of primitives other than the first primitive' based on which a candidate indication of an escape trajectory angle is determined would not comprise primitives which are located entirely behind the plane in which the first primitive lies. The normal to the plane in which the first primitive lies is parallel to the normal of the first primitive. The whole of the first primitive is located in the plane in which the first primitive lies. Figure 7 illustrates a ray being traced from a first primitive 702 which belongs to a subset of primitives of a surface. The other primitives in the subset of primitives are denoted 704, 706, 708 and 710 in Figure 7. The normal of the first primitive 702 is denoted 712, and the dashed line 714 represents the plane in which the first primitive 702 lies. A ray 716 is shown being traced from a point on the first primitive 702. It can be seen that primitives 708 and 710 are located entirely behind the plane 714. As such, since the escape trajectory angle for the first primitive 702 cannot be more than 90°, there is no way that the ray 716 can intersect with either of the primitives 708 and 710. As such, there is no need to determine a candidate indication of an escape trajectory angle for the first primitive 702 based on primitives 708 and 710.

It is noted that for a convex surface, all of the other primitives in a subset of primitives that form part of the surface (i.e. all of the primitives in the subset that are not the first primitive) will lie entirely behind the plane in which the first primitive lies. Therefore, for convex surfaces it is very simple to determine the escape trajectory angle for a primitive of the surface (defined with respect to the primitive's normal): it is 90°. Therefore, in some examples, the determination of an indication of an escape trajectory angle for the first primitive in step S404 comprises: (i) determining that the subset of primitives defines a portion of the surface of the object that is convex; and (ii) setting the indication of the escape trajectory angle for the first primitive to indicate that the escape trajectory angle for the first primitive will allow all rays to escape, e.g. that the escape trajectory angle for the first primitive is 90 degrees. In this case, rather than actually performing a comparison of the trajectory angle for a ray and the escape trajectory angle for the first primitive, step S412 may comprise determining that the trajectory angle of the ray meets the escape criterion with respect to the escape trajectory angle for the first primitive in response to identifying that the indication of the escape trajectory angle for the first primitive is set to indicate that the escape trajectory angle for the first primitive will allow all rays to escape, e.g. that it indicates that the escape trajectory angle for the first primitive, defined with respect to the first primitive's normal, is 90 degrees. In other words, if the escape trajectory angle for the first primitive, defined with respect to the first primitive's normal, is 90° then it is known that the trajectory angle of the ray is less than the escape trajectory angle of the first primitive without having to perform any comparisons or calculations. This is because the trajectory angle for any ray originating from the first primitive is less than 90° with respect to the first primitive's normal.

It can be seen in Figure 7 that the primitive 706 is partially in front of, and partially behind, the plane 714 in which the first primitive lies. In this case, in step S404, it can be identified that the primitive 706 is partially in front of, and partially behind, the plane 714 in which the first primitive lies, and the identified primitive 706 can be clipped to form: (i) a first set of one or more new primitives which do not, even partially, lie behind the plane 714 in which the first primitive 702 lies, and (ii) a second set of one or more new primitives which lie entirely behind the plane 714 in which the first primitive 702 lies. In the example shown in Figure 7, the primitive 706 may be divided, i.e. cut, into two new primitives: (i) a first new primitive which is located above, i.e. in front of, the plane 714 (and not even partially below, i.e. behind, the plane 714), and (ii) a second new primitive which is located below, i.e. behind, the plane 714 (and not even partially above, i.e. in front of, the plane 714). It is noted that, for clarity of disclosure, Figure 7 illustrates a simple two dimensional example in which the primitive can be divided into just two new primitives. In other examples, e.g. in three dimensional examples in which the primitives are triangles, a primitive may need to be divided into more than two new primitives in order to ensure that it forms (i) a first set of one or more new primitives which do not, even partially, lie behind the plane in which the first primitive lies, and (ii) a second set of one or more new primitives which lie entirely behind the plane in which the first primitive lies. In step S404, the first set of one or more new primitives will be processed, but the second set of one or more new primitives will not be processed, to determine the candidate indication of the escape trajectory angle for the first primitive 702 based on the identified other primitive (e.g. primitive 706).

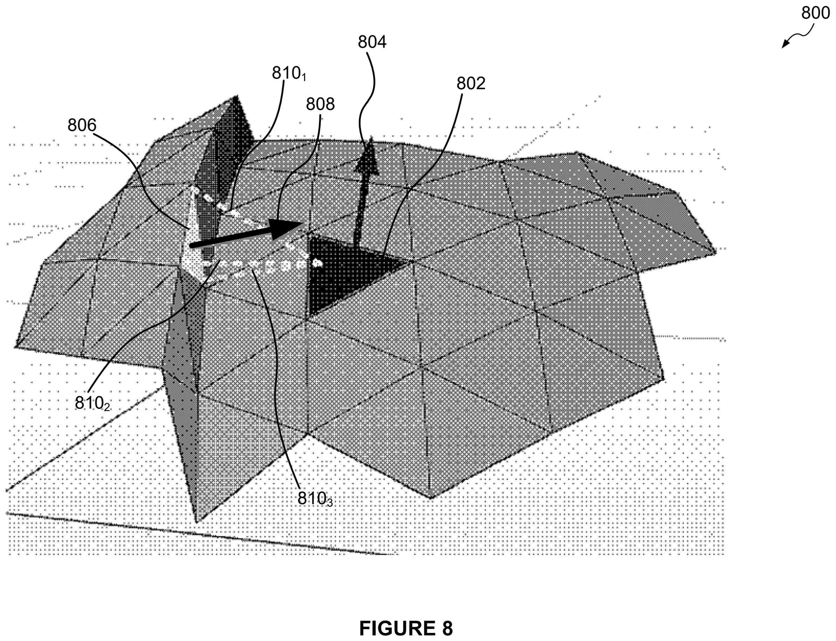

Figures 6 and 7 consider systems in which trajectory angles are defined with respect to primitive normals, and have illustrated some situations in which the determination of the candidate indication of the escape trajectory angle for the first primitive based on another primitive in the subset of primitives can be simplified. However, there are some situations in which the determination of the candidate indication of the escape trajectory angle for the first primitive based on another primitive cannot be simplified using the techniques described above with reference to Figures 6 and 7, and in (at least) these situations a more general technique can be used. Figure 8 also considers a system in which trajectory angles are defined with respect to primitive normals, and illustrates an example in which a more general technique is used. Figure 8 shows a subset of triangular primitives 800 which define a meshlet. A first primitive 802 is shown as a dark triangle and has a normal 804. One of the other primitives 806 is shown as a pale triangle and has a normal 808. It can be seen that the primitives 802 and 806 are not adjacent to each other (i.e. they don't share an edge), so when determining the escape trajectory angle for the first primitive 802, the technique described with reference to Figure 6 cannot be used to determine a minimum collision trajectory angle associated with the primitive 806. Furthermore, the primitive 806 is located in front of a plane in which the first primitive 802 lies, so when determining the escape trajectory angle for the first primitive 802, the techniques described with reference to Figure 7 cannot be used to determine a candidate indication of the escape trajectory angle for the first primitive based on the primitive 806.

In this general case, as part of determining the escape trajectory angle for the first primitive 802 in step S404, a candidate indication of the escape trajectory angle for the first primitive 802 based on each of the other primitives in the subset 800 will be determined. When it comes to determining the candidate indication of the escape trajectory angle for the first primitive 802 based on the primitive 806, step S404 involves checking (or the equivalent of checking) every point P₁, on the first primitive 802 against every point P₂ on the other primitive 806 to determine an indication of the minimum collision trajectory angle that a ray could have from any point on the first primitive 804 whilst hitting the other primitive 806. The dashed lines 810₁, 810₂ and 810₃ shown in Figure 8 illustrate checking angles from a point on the first primitive 802 to the three corners of the primitive 806.

It is noted that a higher value of a cosine of an angle corresponds to a lower value of the angle itself, for angles between 0° and 90°. As such, where the indications of the trajectory angles are cosines of the trajectory angles defined with respect to primitive normals, step S404 may comprise determining a maximum value (*max_cos*) of the cosine of the angle between the normal (N) of the first primitive and a vector between any point (***P*₁**) on the first primitive and any point **(*P*₂)** on the other primitive. This can be determined according to: $max_ cos = max \left(0, \left\{N⋅\frac{{P}_{2} - {P}_{1}}{\left‖{P}_{2}-{P}_{1}\right‖} ∀{P}_{1}∀{P}_{2}\right\}\right) .$ It is noted that the normal, ***N***, is a unit vector, i.e. it has a magnitude of 1. In this way, step S404 can involve evaluating (or the equivalent of evaluating) the dot product between every pair of points (as a unit vector) and the surface normal and then finding the largest (positive) result to thereby determine the cosine of the minimum collision trajectory angle associated with the other primitive 806. This can be done for each of the other primitives in the subset 800, or it may be done for only those other primitives for which the simpler techniques described above with reference to Figure 6 and/or Figure 7 cannot be performed, i.e. only for primitives which are located in front of the plane in which the primitive 802 lies, and/or only for primitives which are not adjacent to (i.e. do not share at least one edge with) the first primitive 802.

As described above, when the indications of the minimum collision trajectory angles have been determined for the different primitives in the subset 800 then step S404 comprises identifying which of the minimum collision trajectory angles associated with the plurality of other primitives in the subset 800 is the smallest. In this case, where the indications of the minimum collision trajectory angles are cosines of the minimum collision trajectory angles then the maximum of the indications (i.e. the maximum of the cosine values) of the minimum collision trajectory angles that have been determined for the different primitives in the subset is identified, and this identified maximum of the cosine values is used as the indication of the escape trajectory angle for the first primitive 802. The maximum of the cosines of the minimum collision trajectory angles corresponds to the smallest of the minimum collision trajectory angles.

A person skilled in the art would know that there are various techniques that could be used to perform the determination of the maximum value (*max_cos*) of the cosine of the angle between the normal (N) of the first primitive 802 and a vector between any point (***P*₁**) on the first primitive 802 and any point (***P*₂**) on the other primitive 806 according to the equation given above. This is an optimisation problem in four variables. Every point **P₁,** and **P₂** can be represented using barycentric coordinates as ${P}_{1} \left({α}_{1}, {β}_{1}\right) = {α}_{1} . {V}_{10} + {β}_{1} . {V}_{11} + \left(1-{α}_{1}-{β}_{1}\right) . {V}_{12}$ ${P}_{2} \left({α}_{2}, {β}_{2}\right) = {α}_{2} . {V}_{20} + {β}_{2} . {V}_{21} + \left(1-{α}_{2}-{β}_{2}\right) . {V}_{22}$ where $0 \leq {α}_{t} , {β}_{t} , \left(1-{α}_{t}-{β}_{t}\right) \leq 1 t ∈ \left\{1, 2\right\}$ and where ***V*₁₀, *V*₁₁, *V*₁₂** are the vertices of the first primitive 802 and ***V*₂₀*,V*₂₁, *V*₂₂** are the vertices of the other primitive 806.

This optimisation problem can be 'solved' in several known ways, for example using: (i) a simplex method for solving optimisation problems, (ii) a conjugate gradient hill climbing technique, or (iii) interval arithmetic.

If a simplex method is used, as there are four variables, five combinations (i.e. one more than the number of variables) of values are chosen of the form {α₁ , β₁, α₂ , β₂}. For example, from an initial set of size six, with three being three vertices of primitive 802 and the centre of the primitive 806, $\left(0, 0, \frac{1}{3}, \frac{1}{3}\right) , \left(1, 0, \frac{1}{3}, \frac{1}{3}\right) , \left(0, 1, \frac{1}{3}, \frac{1}{3}\right)$ and another corresponding set of three with the centre of primitive 802 and the vertices of primitive 806, $\left(\frac{1}{3},\frac{1}{3}0,0\right) , \left(\frac{1}{3},\frac{1}{3}0,0\right) , \left(\frac{1}{3}, \frac{1}{3}, 0, 1\right)$ these six combinations of values can be evaluated with ${N}_{1} . \frac{{P}_{1} \left({α}_{1}, {β}_{1}\right) - {P}_{2} \left({α}_{2}, {β}_{2}\right)}{\left|{P}_{1}\left({α}_{1}, {β}_{1}\right)-{P}_{2}\left({α}_{2}, {β}_{2}\right)\right|}$ and the one with the smallest value can be eliminated to leave just five combinations of values.

The remaining five combinations of values can be the starting values for the "simplex method" with the aim of maximising the result. The algorithm of the simplex method is known in the art, so a detailed description of that algorithm in this disclosure is not necessary, but to give a very brief overview of the algorithm, it involves taking the smallest of the five combinations of values and 'reflecting' it about the "plane" of the other combinations and seeing if that gives a larger result. If it does, then it is moved further. If it does not give a larger result, then alternative 'transformations' are performed, including contracting the set, until the algorithm narrows down on a (local) maximum. It is possible that the 'reflecting' steps could move the {α₁ , β₁, α₂ , β₂} values out of the legal range (0 ≤ *αₜ*, β*ₜ*, (1 - α*ₜ* - β*ₜ*) ≤ 1 t ∈ {*r,g*} ) and so the scheme may be adapted to include clipping to keep the values within the legal range.

An alternative to using the simplex method, which may be faster, is to use conjugate gradient "hill climbing" and make use of the partial derivatives of the function. These sorts of hill climbing techniques are known in the art for example as described in Chapter 10.8 "Conjugate Gradient Methods in Multidimensions", in "Numerical Recipes in C++, Third Edition" by William H. Press et al.

The simplex and hill climbing techniques mentioned above may arrive at a "local" maximum rather than a global maximum, although given the simplicity of the functions, it is unlikely that the local maximum will often be different to the global maximum. As another alternative, interval arithmetic may be used to solve the optimisation problem. In an interval arithmetic technique, an initial set of N "areas" is chosen in the 4D space, i.e. 'points with intervals around them' are chosen such that all points in the space are included. The function can be evaluated with interval arithmetic on each of the points to determine conservative range results. Any 'area' whose result's maximum range is smaller than the minimum of any others can be eliminated from further consideration. The result with the largest maximum can be taken and it can be subdivided and reevaluated. These steps can be repeated until enough steps have been taken to find an accurate enough, yet conservative, bound.

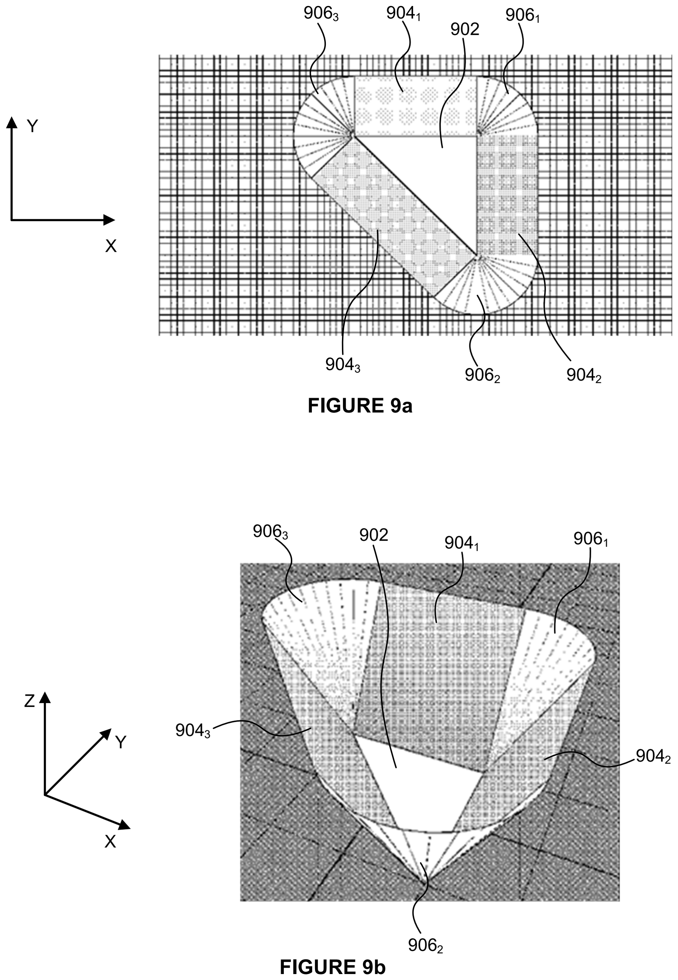

Figures 9a and 9b show a region of escape for a primitive 902. In particular, Figure 9a shows a plan view of the region of escape for the primitive 902, and Figure 9b shows a perspective view of the region of escape for the primitive 902. Figures 9a and 9b show the orientation of the X, Y and Z axes, where in Figure 9a the Z axis is directed out of the page. The normal of the primitive 902 is parallel to the Z axis, i.e. out of the page in Figure 9a and vertical in Figure 9b. The region of escape for the primitive is the union of all cones having their apexes at any point on the primitive 902, having their longitudinal axes parallel to the normal of the primitive 902, and having conic half-angles equal to the escape trajectory angle of the primitive 902. As such, the region of escape is formed by: (i) three planes 904₁, 904₂ and 904₃ which are angled away from respective edges of the primitive 902 at the escape trajectory angle, and (ii) three portions of a cone 906₁, 906₂ and 906₃ which are positioned with their apexes at respective vertices of the primitive 902 and which connect adjacent planes 904. The three portions of a cone 906 sum to give a full cone having a conic half-angle equal to the escape trajectory angle of the primitive 902. If a ray is being traced to or from a point on the primitive 902 and has a direction which falls within the region of escape then it can be inferred that the ray will not intersect any other primitives in the subset of primitives to which the primitive 902 belongs.

The examples described above substitute some intersection testing for a ray with respect to a subtree of nodes of an acceleration structure associated with a subset of primitives, with a different (more efficient) test that can immediately rule out intersection with the subset of primitives as a whole, and thus obviate the need to traverse the subtree of nodes. The efficiencies that are gained during the traversal of the ray are achieved by performing more pre-processing, i.e. by determining the escape trajectory angles for the primitives. The pre-processing (i.e. the determination of the escape trajectory angles for the primitives) can be performed offline so it does not introduce latency in the traversal process.

The methods described herein are particularly efficient when a subset of primitives defines a meshlet, and when the meshlet has its own subtree of one or more nodes within the acceleration structure. In this case, in response to determining that it can be inferred that the ray will miss all of the primitives that are not the first primitive in the subsets of primitives defining a meshlet, intersection testing of the ray with the whole subtree of one or more nodes for the meshlet can be skipped. In other words, if it can be determined that a ray does not intersect a meshlet, then the entire region of the acceleration structure associated with that meshlet can be skipped.

In the examples described above the ray that is being traced from the first primitive is emitted from the front side of the first primitive, i.e. external to an object of which the first primitive is a part of the surface, e.g. the ray may be a reflection ray. It is sometimes necessary to trace rays internal to an object, e.g., a refraction ray for a translucent object, or because the other side of the meshlet may be observable in some scenario. The same techniques as described above can be used for rays that are emitted internally from the first primitive. In this case, prior to traversing the acceleration structure for the ray, e.g. in step S404, two indications of escape trajectory angles may be determined for respective sides of the first primitive. Then, during traversal of the acceleration structure for the ray step S410 may involve receiving (e.g. reading) both of the indications of the escape trajectory angles for the respective sides of the first primitive, and then between steps S410 and S412 the traversal logic 308 can identify which side of the first primitive the ray is being traced to or from, and select the one of the two indications of escape trajectory angles for the first primitive which is for the identified side of the first primitive. Then the selected indication of the escape trajectory angle for the first primitive is used (in step S412) to determine whether a trajectory angle of the ray meets the escape criterion with respect to the escape trajectory angle for the first primitive.

It is noted that there is not necessarily any particular relationship between the escape trajectory angles determined for the different sides of the same primitive, because they each depend (differently) on the positions of the other primitives in the subset of primitives. Therefore, when secondary rays may be emitted from either side of a primitive, the two escape trajectory angles are computed in step S404 for that primitive such that the primitive has an upper escape trajectory angle and a lower escape trajectory angle.

The escape trajectory angles described herein are determined to cover the worst case, i.e. they are determined conservatively, independent of where a ray may originate from on the surface of the primitive. As such, just one escape trajectory angle (or one escape trajectory angle per side) is determined per primitive.

As described above, an indication of an escape trajectory angle may be determined for each primitive. Alternatively, a single indication of a single escape trajectory angle (a "meshlet trajectory angle") may be determined for an entire meshlet. In order to determine the indication of the meshlet escape trajectory angle, the indications of the individual escape trajectory angles for the different primitives of the meshlet may be determined as described above, and then the indication which indicates the most conservative (e.g. the smallest) escape trajectory angle of any of the primitives in the meshlet can be selected and used as the indication of the meshlet escape trajectory angle. In this way, the meshlet escape trajectory angle is selected conservatively so that it can be used with all of the primitives of the meshlet without introducing rendering errors. In this case, for each primitive of the meshlet, the meshlet escape trajectory angle may determine a trajectory angle relative to the normal of that primitive. As such, in this case, although each primitive of a meshlet uses the same meshlet escape trajectory angle, the escape trajectory angles for all of the primitives of the meshlet might not all be parallel with each other because the normals of the primitives of the meshlet might not all be parallel with each other. Using an indication of a meshlet escape trajectory angle rather than using indications of individual escape trajectory angles for the different primitives of a meshlet means that less data needs to be stored for the indications of the escape trajectory angles, but might lead to fewer gains in the efficiency of the traversal process because there will be fewer occasions when the intersection testing can be skipped. So there is a trade-off to consider between the amount of data that needs to be stored vs the efficiency gains that can be achieved when deciding whether to implement indications of escape trajectory angles per meshlet or indications of trajectory angles per primitive.

In another example, the meshlet escape trajectory angles may be defined relative to the normal of a plane of the meshlet. In order to implement this, a plane of the meshlet is determined, e.g. as an average of the planes of the primitives of the meshlet. Then the meshlet escape trajectory angle for the meshlet and the trajectory angle of a ray can be determined relative to the normal of the plane of the meshlet.

As described above, since the escape trajectory angle is a property of the primitive/meshlet and is independent of any given ray being traced, the escape trajectory angles can be generated offline for a given meshlet or set of meshlets (presuming that the shape of the object is approximately static). Although this represents additional data to be stored and read, this additional overhead is outweighed by the benefits that can be achieved by skipping the intersection testing for some portions of the acceleration structure in step S416 as described above.

In examples described above, the subsets of primitives for which indications of escape trajectory angles are determined define meshlets. In other examples, the subsets of primitives for which indications of escape trajectory angles are determined do not necessarily define meshlets. For example, each of the subsets of primitives for which indications of escape trajectory angles are determined may be associated with a subtree of one or more nodes within the acceleration structure (irrespective of whether or not the subtree of node(s) relates to a meshlet). For example, after the nodes of the acceleration structure have been generated, subtrees of nodes within the acceleration structure may be identified, wherein each identified subtree of node(s) is associated with a subset of primitives for which an escape trajectory angle is determined. The subtrees may be determined so that they cover a predetermined number of levels of the hierarchy of the acceleration structure. The subtrees may be determined so that they correspond to subsets of primitives which each have no more than a threshold number of primitives. This threshold number of primitives could take any suitable value, e.g. 256.

The size of a subtree (e.g. the number of primitives in a subset of primitives associated with the subtree) may be different in different examples. Having larger subsets of primitives (i.e. larger subtrees) increases the computational complexity of determining the escape trajectory angles and tends to reduce the number of rays for which the escape trajectory angle can be used to skip intersection testing of the subtree. However, if a larger subtree can be skipped then the advantages in reducing the computation that is performed for the intersection testing are larger. As an example, following the construction of the acceleration structure, non-overlapping subtrees containing no more than 256 primitives may be identified, to define the subsets of primitives for which the escape trajectory angles are to be determined. Setting the threshold number of primitives in a subset of primitives to be 256 is usually large enough so that if the intersection testing of a ray with a subtree of nodes including approximately 256 primitives can be skipped then this means that a significant number of box and triangle intersection tests can be skipped. Furthermore, setting the threshold number of primitives in a subset of primitives to be 256 is not too large, such that the complexity and time involved in calculating the escape trajectory angles for the subsets of primitives does not become too large.

As described above, in order to determine the escape trajectory angle for a primitive within a subset of primitives, every primitive within the subset of primitives is considered. In this way, the number of calculations involved in calculating the escape trajectory angles for the primitives within a subset of primitives has a quadratic relationship with the number of primitives in the subset of primitives, n. In other words the cost of generating the escape trajectory angles for the primitives of a subset of primitives in the examples described above is *O*(*n*²)*.* In other examples, where a subset of primitives is associated with a subtree of nodes of the acceleration structure, the cost of generating the escape trajectory angles for the primitives of a subset of primitives can be reduced by considering the bounding boxes of the nodes of the subtree associated with the subset of primitives. For example, when calculating an escape trajectory angle for a particular primitive of the subset of primitives, the particular primitive will not be within the regions represented by some of the nodes of the associated subtree, and in this case, the bounding boxes of those nodes can be considered rather than considering every primitive within those nodes in order to determine the escape trajectory angle for the particular primitive. Using bounding boxes of nodes of the subtree rather than the primitives themselves where possible can reduce the number of calculations that need to be performed to determine the escape trajectory angles for the primitives of a subset of primitives. If a (candidate) lower bound on the escape trajectory angle for a primitive is known, thereby defining a candidate escape region, and a bounding box is outside of that candidate escape region, then it can be immediately determined that all of the primitives within the bounding box do not need to be considered further for calculating the escape trajectory angle for the primitive. For example, the cost of generating the escape trajectory angles for the primitives of a subset of primitives in this way may be *O*(*n* log *n*). The approach described above can use the bounding boxes of nodes of a subtree to rapidly narrow down the "worst case" candidates for determining the escape trajectory angle for a primitive. If a bounding box is found to lie within the current candidate escape region then the primitives within the bounding box may be further considered for calculating the escape trajectory angle for the primitive. In some other examples, if a bounding box is found to lie within the current candidate escape region then the bounding box may be considered rather than the primitives within the bounding box, for calculating the escape trajectory angle for the primitive. Although considering the bounding boxes in this way may reduce the cost of calculating the escape trajectory angles, it may also make the calculated escape trajectory angles more conservative, such that fewer rays may meet the escape criterion, such that fewer intersection tests may be skipped. So there is a trade-off to consider between reducing the cost of the calculation of the escape trajectory angles and reducing the number of calculations that are performed during intersection testing.

In some examples, differently sized subtrees may be identified for different primitives. In general, the larger the subtree that is used to determine an escape trajectory angle for a primitive, the fewer rays will have a trajectory angle that meets the escape criterion with respect to the escape trajectory angle for the primitive, but the more intersection tests can be skipped if it is found that a ray has a trajectory angle that meets the escape criterion with respect to the escape trajectory angle for the primitive. As such, if choosing the size of a subtree to be used for defining an escape trajectory angle for a primitive, there may be a trade-off between setting the escape trajectory angle for a primitive so that a large number of rays will have a trajectory angle that meets the escape criterion with respect to the escape trajectory angle for the primitive, and setting the escape trajectory angle so that a large number of intersection tests can be skipped when a ray is found to have a trajectory angle that meets the escape criterion with respect to the escape trajectory angle for the primitive. A heuristic may be used to determine an optimum size of a subtree to be associated with each primitive based on this trade-off. As an example, having an escape trajectory angle for a primitive of 30° may be able to skip intersection testing for a subtree of height 7 (i.e. a subtree having nodes at seven levels in the acceleration structure), but if having an escape trajectory angle for a primitive of 29° may be able to skip intersection testing for a subtree of height 8 (i.e. a subtree having nodes at eight levels in the acceleration structure) then it may be preferable to choose the escape trajectory angle to be 29° so that when a ray does meet the escape criterion, intersection testing can be skipped for a greater number of nodes of the acceleration structure.

In some examples, a primitive may belong to a plurality of (at least partially overlapping) subsets of primitives, where each of the subsets of primitives is associated with a respective subtree of one or more nodes within the acceleration structure. An escape trajectory angle may be determined for the primitive corresponding to each of the subsets of primitives to which it belongs, with narrower escape trajectory angles indicating larger subtrees which have nodes further up the hierarchical acceleration structure, and with wider escape trajectory angles indicating smaller subtrees which do not have nodes extending as far up the hierarchical acceleration structure. Indications of the escape trajectory angles for a primitive can be stored with the acceleration structure and can be fetched when a secondary ray is generated which is to be traced to or from the primitive. In these examples, for each of the subsets of primitives to which a particular primitive belongs, an indication of an escape trajectory angle for the particular primitive in respect of the subset of primitives is received (e.g. in step S410). Any ray originating from any point on the particular primitive and having a trajectory angle that meets an escape criterion with respect to the escape trajectory angle in respect of a subset of primitives will miss all of the primitives in the subset of primitives.

If there are multiple escape trajectory angles corresponding to multiple subsets of primitives for a particular primitive for which a ray is being traced to or from, then the method can include choosing one of the subsets of primitives. In particular, one of the subsets of primitives can be selected based on the trajectory angle of the ray and the indications of the escape trajectory angles for the particular primitive in respect of the subsets of primitives, and then the indication of the escape trajectory angle for the particular primitive that is used to determine whether the trajectory angle of the ray meets the escape criterion is the indication of the escape trajectory angle for the particular primitive in respect of the selected subset of primitives. The subset of primitives that is selected has an escape trajectory angle for which the trajectory angle of the ray meets the escape criterion. In other words, the subset of primitives is selected (if possible) so that the ray falls within the region of escape (i.e. the 'escape cone') defined by the escape trajectory angle for the selected subset of primitives. Of the subsets of primitives for which the trajectory angle of the ray meets the escape criterion with respect to the escape trajectory angle for the particular primitive in respect of that subset of primitives, the selected subset of primitives is the one for which the escape trajectory angle for the particular primitive is closest to the trajectory angle of the ray. In this way, the narrowest escape cone that the ray falls within is selected. This means that the largest subtree of nodes to which the particular primitive belongs and for which intersection testing can be skipped based on its escape trajectory angle is selected.

As described above the subset of primitives, which includes the first primitive, is part of a surface. The surface may be a surface of an object. The ray may be a secondary ray that originates from the first primitive and is being traced from the first primitive. For example, the secondary ray may be a result of an intersection between a previous ray, e.g. a primary ray, and the first primitive. Generally, rays that originate from a surface would be reflection or shadow rays. Shadow rays may be emitted towards a light source.

In other examples, the surface may be an emissive surface of a light source. The ray (e.g. a shadow ray) may be being traced to the first primitive. For some shadow rays, the meshlet culling mechanism described herein can be applied twice for that ray, because the light can be modelled as an emissive surface. An escape trajectory angle may be determined and used with respect to a light-emitting surface to which a ray is being traced in the same way as described herein for a surface of an object from which a ray is being traced.

In fully path-traced scenes, a light may be modelled as an emissive surface that is defined via its own mesh (and thus via meshlets), meaning that a shadow ray cast between a light and another object surface may meet a meshlet at both ends. Consequently, if the meshlets for both the light and object are bound in a meshlet-defined acceleration structure, the culling mechanism may be applied twice for a single ray.

As well as improving the efficiency of the ray tracing process, the techniques described herein can also significantly improve the quality of the final rendered images that are produced by the ray tracing process. In particular, since ray tracing generally comprises performing calculations involving numbers in a floating point format, the calculations are prone to accumulated rounding errors/imprecision. For example, when a secondary ray (e.g. a shadow or reflection ray) is emitted from a surface (because a parent ray had hit the surface), the computed origin of that ray will not usually be 'exactly' on the surface. Due to rounding it will often be somewhere in front or behind the surface. If the origin of the secondary ray were behind the surface then that new secondary ray will likely hit the surface again which gives rise to so-called surface- or shadow-acne. To work around this, a known technique is often used which moves the ray origin by a small amount (an "epsilon" step, ε) in the positive ray direction. This reduces the acne artifacts, but it does not completely eliminate them, and can lead to other errors. In particular, the technique of shifting the ray origin by an amount, ε, is prone to:
a) the shift amount, ε, not being large enough as rays get more imprecise, e.g. as they get further from the origin, such that the acne artifacts still persist, and
b) the shift amount, ε, being too large, such that there is another object nearby that the ray should be found to intersect, but which is missed due to shift in the ray's origin. For example, the nearby object may be meant to cast a shadow, and moving the ray origin may mean that the ray is not found to intersect the nearby object and the original object is erroneously rendered as if it is not in shadow.

The use of the techniques described herein whereby the intersection testing of a subset of primitives can be skipped based on the escape trajectory angle of the first primitive and the trajectory angle of the ray (instead of shifting the ray origin by a small amount), very significantly reduces the surface acne problem and does so without causing other rendering errors.

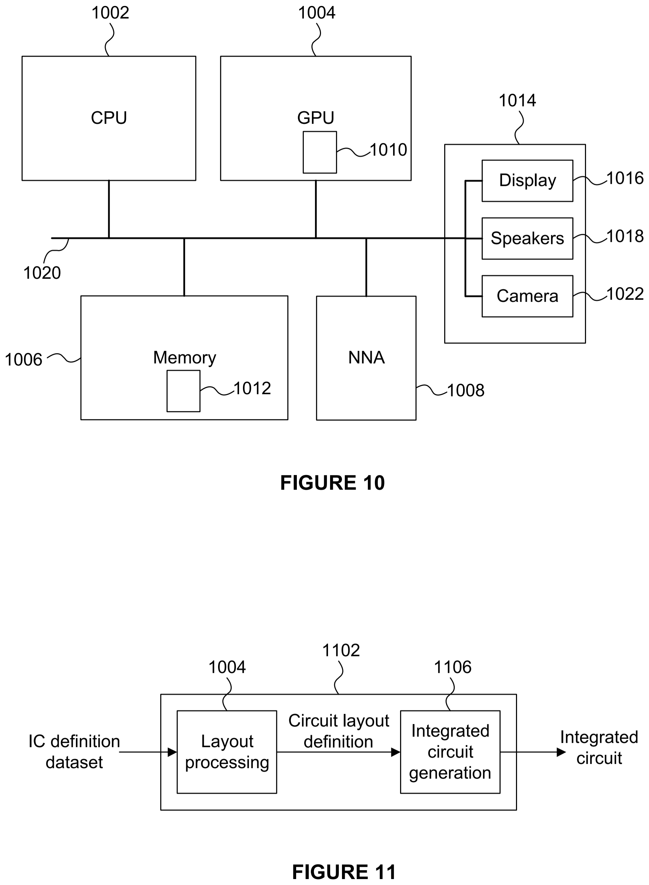

Figure 10 shows a computer system in which the ray tracing systems described herein may be implemented. The computer system comprises a CPU 1002, a GPU 1004, a memory 1006, a neural network accelerator (NNA) 1008 and other devices 1014, such as a display 1016, speakers 1018 and a camera 1022. A processing block 1010 (corresponding to the ray tracing unit 302) is implemented on the GPU 1004. In other examples, one or more of the depicted components may be omitted from the system, and/or the processing block 1010 may be implemented on the CPU 1002 or within the NNA 1008. The components of the computer system can communicate with each other via a communications bus 1020. A store 1012 (corresponding to memory 304) is implemented as part of the memory 1006.

The ray tracing system of Figure 3 is shown as comprising a number of functional blocks. This is schematic only and is not intended to define a strict division between different logic elements of such entities. Each functional block may be provided in any suitable manner. It is to be understood that intermediate values described herein as being formed by a ray tracing system need not be physically generated by the ray tracing system at any point and may merely represent logical values which conveniently describe the processing performed by the ray tracing system between its input and output.

The ray tracing systems described herein may be embodied in hardware on an integrated circuit. The ray tracing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a ray tracing system configured to perform any of the methods described herein, or to manufacture a ray tracing system comprising any apparatus described herein. An integrated circuit definition dataset may be, for example, an integrated circuit description.

Therefore, there may be provided a method of manufacturing, at an integrated circuit manufacturing system, a ray tracing system as described herein. Furthermore, there may be provided an integrated circuit definition dataset that, when processed in an integrated circuit manufacturing system, causes the method of manufacturing a ray tracing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a ray tracing system will now be described with respect to Figure 11.

Figure 11 shows an example of an integrated circuit (IC) manufacturing system 1102 which is configured to manufacture a ray tracing system as described in any of the examples herein. In particular, the IC manufacturing system 1102 comprises a layout processing system 1104 and an integrated circuit generation system 1106. The IC manufacturing system 1102 is configured to receive an IC definition dataset (e.g. defining a ray tracing system as described in any of the examples herein), process the IC definition dataset, and generate an IC according to the IC definition dataset (e.g. which embodies a ray tracing system as described in any of the examples herein). The processing of the IC definition dataset configures the IC manufacturing system 1102 to manufacture an integrated circuit embodying a ray tracing system as described in any of the examples herein.

The layout processing system 1104 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1104 has determined the circuit layout it may output a circuit layout definition to the IC generation system 1106. A circuit layout definition may be, for example, a circuit layout description.

The IC generation system 1106 generates an IC according to the circuit layout definition, as is known in the art. For example, the IC generation system 1106 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1106 may be in the form of computer-readable code which the IC generation system 1106 can use to form a suitable mask for use in generating an IC.

The different processes performed by the IC manufacturing system 1102 may be implemented all in one location, e.g. by one party. Alternatively, the IC manufacturing system 1102 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a ray tracing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 11 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 11, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of implementing ray tracing in a ray tracing system by traversing an acceleration structure for a ray that is being traced to or from a first primitive forming part of a surface, wherein the first primitive belongs to a subset of primitives of the surface, the method comprising:
during traversal of the acceleration structure for said ray that is being traced to or from the first primitive:
receiving an indication of an escape trajectory angle for the first primitive, wherein the indication of the escape trajectory angle for the first primitive is determined prior to traversal of the acceleration structure for the ray, and wherein any ray originating from any point on the first primitive and having a trajectory angle that meets an escape criterion with respect to the escape trajectory angle will miss all of the primitives in the subset of primitives;
using the determined indication of the escape trajectory angle for the first primitive to determine whether a trajectory angle of the ray meets the escape criterion with respect to the escape trajectory angle for the first primitive; and
in response to determining that the trajectory angle of the ray meets the escape criterion with respect to the escape trajectory angle for the first primitive, inferring that the ray misses all of the primitives that are not the first primitive in the subset of primitives, and skipping intersection testing of the ray with portions of the acceleration structure associated with the subset of primitives.

2. The method of claim 1 wherein the trajectory angle of the ray meets the escape criterion with respect to the escape trajectory angle for the first primitive if the trajectory angle of the ray is less than the escape trajectory angle for the first primitive.

3. The method of claim 1 or 2, wherein the trajectory angle of the ray is the angle between the direction of the ray and the normal of first primitive, or wherein the trajectory angle of the ray is the angle between the direction of the ray and the normal of a plane associated with the subset of primitives.

4. The method of any preceding claim wherein:
(i) a respective indication of an escape trajectory angle is determined for each of the primitives in the subset of primitives,
(ii) the determined indication of the escape trajectory angle for the first primitive indicates an escape trajectory angle for a plurality, but not for all, of the primitives of the subset of primitives, or
(iii) the determined indication of the escape trajectory angle for the first primitive indicates an escape trajectory angle for all of the primitives of the subset of primitives.

5. The method of any preceding claim, wherein the subset of primitives of the surface defines a meshlet, and wherein the method further comprises, prior to traversing the acceleration structure for the ray, generating nodes of the acceleration structure, wherein the meshlet defined by the subset of primitives has its own subtree of one or more nodes within the acceleration structure,
optionally wherein said skipping intersection testing of the ray with portions of the acceleration structure associated with the subset of primitives comprises skipping intersection testing of the ray with the subtree of one or more nodes for the meshlet.

6. The method of any preceding claim wherein said using the determined indication of the escape trajectory angle for the first primitive to determine whether a trajectory angle of the ray meets the escape criterion with respect to the escape trajectory angle for the first primitive comprises either:
(i) comparing the trajectory angle of the ray with the escape trajectory angle for the first primitive, or
(ii) comparing the cosine of the trajectory angle of the ray with the cosine of the escape trajectory angle for the first primitive.

7. The method of any preceding claim further comprising, prior to traversing the acceleration structure for the ray, determining the indication of the escape trajectory angle for the first primitive,
wherein said determining the indication of the escape trajectory angle for the first primitive comprises:
for each of a plurality of other primitives in the subset of primitives other than the first primitive, determining a candidate indication of an escape trajectory angle for the first primitive based on the other primitive; and
identifying one of the candidate indications to be used as the indication of the escape trajectory angle for the first primitive on the basis that any ray originating from any point on the first primitive and having a trajectory angle that meets the escape criterion with respect to the escape trajectory angle indicated by the identified candidate indication will miss all of the primitives in the subset of primitives.

8. The method of claim 7 wherein the trajectory angle of the ray is defined with respect to the normal of the first primitive, and wherein a candidate indication of an escape trajectory angle for the first primitive based on an other primitive is an indication of a minimum trajectory angle that a ray originating from any point on the first primitive and hitting the other primitive could have, and wherein the identified candidate indication is the candidate indication which indicates the smallest of the minimum trajectory angles which have been determined for said plurality of other primitives,
optionally wherein said determining an indication of a minimum trajectory angle that a ray originating from any point on the first primitive and hitting an other primitive could have comprises:
determining a maximum value (*max_cos*) of the cosine of the angle between the normal (*N*) of the first primitive and a vector between any point (*P*₁) on the first primitive and any point (*P*₂) on the other primitive, wherein $max_ cos = max \left(0, \left\{N⋅\frac{{P}_{2} - {P}_{1}}{\left‖{P}_{2}-{P}_{1}\right‖} ∀{P}_{1}∀{P}_{2}\right\}\right) .$

9. The method of any preceding claim wherein the method comprises, prior to traversing the acceleration structure for the ray, determining the indication of the escape trajectory angle for the first primitive,
wherein said determining the indication of the escape trajectory angle for the first primitive comprises:
determining that the subset of primitives defines a portion of the surface of the object that is convex; and
setting the indication of the escape trajectory angle for the first primitive to indicate that the escape trajectory angle for the first primitive will allow all rays to escape;
wherein said using the determined indication of the escape trajectory angle for the first primitive to determine whether a trajectory angle of the ray meets the escape criterion with respect to the escape trajectory angle for the first primitive comprises determining that the trajectory angle of the ray meets the escape criterion with respect to the escape trajectory angle for the first primitive in response to identifying that the indication of the escape trajectory angle for the first primitive is set to indicate that the escape trajectory angle for the first primitive will allow all rays to escape.

10. The method of any preceding claim, further comprising:
prior to traversing the acceleration structure for the ray, storing the indication of the escape trajectory angle for the first primitive in a memory;
wherein said receiving an indication of an escape trajectory angle for the first primitive during traversal of the acceleration structure for the ray comprises reading the indication of the escape trajectory angle for the first primitive from the memory.

11. The method of any preceding claim wherein the subset of primitives is associated with a subtree of one or more nodes within the acceleration structure.

12. The method of any preceding claim wherein the first primitive belongs to a plurality of subsets of primitives, wherein each of the subsets of primitives is associated with a respective subtree of one or more nodes within the acceleration structure, and wherein the method comprises:
for each of the subsets of primitives to which the first primitive belongs, receiving an indication of an escape trajectory angle for the first primitive in respect of the subset of primitives, wherein the indication of the escape trajectory angle for the first primitive in respect of the subset of primitives is determined prior to traversal of the acceleration structure for the ray, and wherein any ray originating from any point on the first primitive and having a trajectory angle that meets an escape criterion with respect to the escape trajectory angle in respect of the subset of primitives will miss all of the primitives in the subset of primitives;
wherein said using the determined indication of the escape trajectory angle for the first primitive to determine whether a trajectory angle of the ray meets the escape criterion with respect to the escape trajectory angle for the first primitive comprises:
selecting one of the subsets of primitives based on the trajectory angle of the ray and the indications of the escape trajectory angles for the first primitive in respect of the subsets of primitives;
wherein the determined indication of the escape trajectory angle for the first primitive that is used to determine whether the trajectory angle of the ray meets the escape criterion is the indication of the escape trajectory angle for the first primitive in respect of the selected subset of primitives.

13. A ray tracing system configured to perform the method of any of claims 1 to 12.

14. Computer readable code configured to cause the method of any of claims 1 to 12 to be performed when the code is run.

15. A computer readable storage medium having stored thereon an integrated circuit definition dataset that, when processed in an integrated circuit manufacturing system, configures the integrated circuit manufacturing system to manufacture a ray tracing system as claimed in claim 13.
